(19) Europäisches Patentamt
European Patent Office
Office européen des brevets

(11) **EP 3 528 378 B1**

(12) **EUROPEAN PATENT SPECIFICATION**

(45) Date of publication and mention
of the grant of the patent:
**09.06.2021  Bulletin 2021/23**

(51) Int Cl.:
*H02M 3/335* (2006.01)          *H02M 3/337* (2006.01)
*H02M 1/00* (2006.01)

(21) Application number: **19155919.4**

(22) Date of filing: **07.02.2019**

(54) **ELECTRONIC CONVERTER AND RELATED LIGHTING SYSTEM**

ELEKTRONISCHER WANDLER UND ZUGEHÖRIGES BELEUCHTUNGSSYSTEM

CONVERTISSEUR ÉLECTRONIQUE ET SYSTÈME D'ÉCLAIRAGE ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.02.2018  IT 201800002793**

(43) Date of publication of application:
**21.08.2019  Bulletin 2019/34**

(73) Proprietors:
• **OSRAM GmbH
80807 München (DE)**
• **OSRAM S.P.A. - SOCIETA' RIUNITE OSRAM
EDISON CLERICI
20126 Milano (IT)**
Designated Contracting States:
**IT**

(72) Inventor: **LUCCATO, Daniele
I-31029 Vittorio Veneto (Treviso) (IT)**

(74) Representative: **Meindl, Tassilo
Buzzi, Notaro & Antonielli d'Oulx S.p.A.
Corso Vittorio Emanuele II, 6
10123 Torino (IT)**

(56) References cited:
**US-A1- 2010 020 578      US-A1- 2011 228 566
US-A1- 2012 236 610      US-A1- 2015 109 824
US-B2- 9 203 318**

**Description**

Field of the Invention

The description relates to electronic converters.

Description of the Related Art

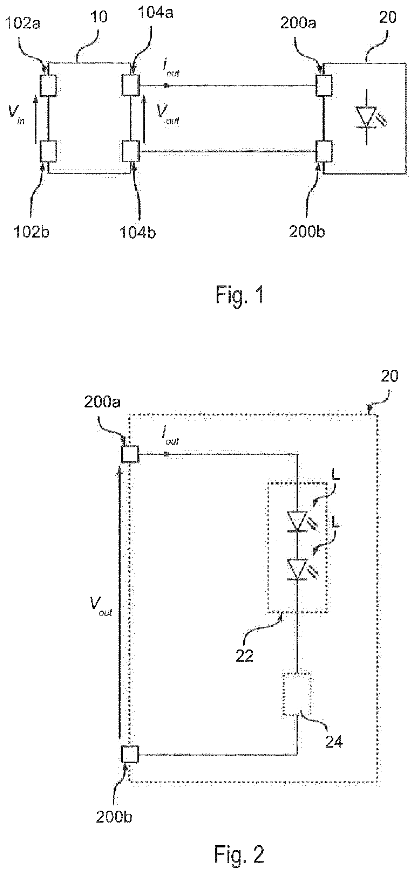

Figure 1 shows a typical lighting system including an electronic converter 10 and at least one lighting module 20. Generally speaking, a lighting module 20 includes one or more light radiation sources, including e.g. at least one LED (Light Emitting Diode) or other solid-state lighting means, such as e.g. laser diodes.

Specifically, in the presently considered example, the electronic converter 10 is an AC/DC electronic converter. Therefore, the electronic converter 10 includes two input terminals 102a and 102b for the connection to the mains, and two output terminals 104a and 104b for the connection to the lighting module (s) 20. Typically, line 102a is connected to phase L and terminal 102b is connected to neutral N.

Generally speaking, the electronic converter 10 may be either a voltage generator or a current generator. Similarly, the lighting module 20 may be configured to be supplied with a regulated voltage or current.

Therefore, the electronic converter 10 receives at input, via terminals 102a and 102b, an alternated voltage $V_{in}$, such as e.g. 110 or 230 VAC, and supplies at output, via positive terminal 104a and negative terminal 104b, a regulated voltage $V_{out}$, such as e.g. 12 or 24 VDC, or a regulated current $i_{out}$.

Figure 2 shows an example of a lighting module 20. Specifically, the lighting module 20 includes a positive input terminal 200a and a negative input terminal 200b, for the connection to the terminals 104a and 104b of electronic converter 10. For example, the lighting module 20 may be connected, either directly or through a cable, to the electronic converter 10. Therefore, the terminal 200a is connected to the positive terminal 104a, and the terminal 200b is connected to the negative terminal 104b, and thus the lighting module receives the regulated voltage $V_{out}$ or the regulated current $i_{out}$.

In the presently considered example, the lighting module 20 is a LED module including one or more LEDs (or laser diodes) L, connected between the terminals 200a and 200b. For example, module 20 may include a LED chain or string 22, wherein a plurality of LEDs L (or similarly laser diodes) are connected in series.

If the lighting module 20 is supplied with a regulated voltage, the lighting module 20 typically includes a current regulator 24, connected in series with the LED string 22. In the simplest of cases, the current regulator 24 may be a resistor or a linear current regulator. The current regulator 24 may also be implemented with current mirrors or with a switched mode current source, typically including an inductor and an electronic switch.

Generally speaking, also a plurality of lighting modules 20 may be connected to the electronic converter 10. For example, if a regulated voltage $V_{out}$ is employed, the lighting modules 20 may be connected in parallel to the terminals 104a and 104b. On the other hand, if a regulated current $i_{out}$ is used, the lighting modules 20 are typically connected in series between the terminals 104a and 104b.

For safety reasons, the electronic converter 10 is often required to be an isolated converter. Therefore, in this case, the electronic converter 10 includes at least one transformer T including a primary winding T1 and a secondary winding T2.

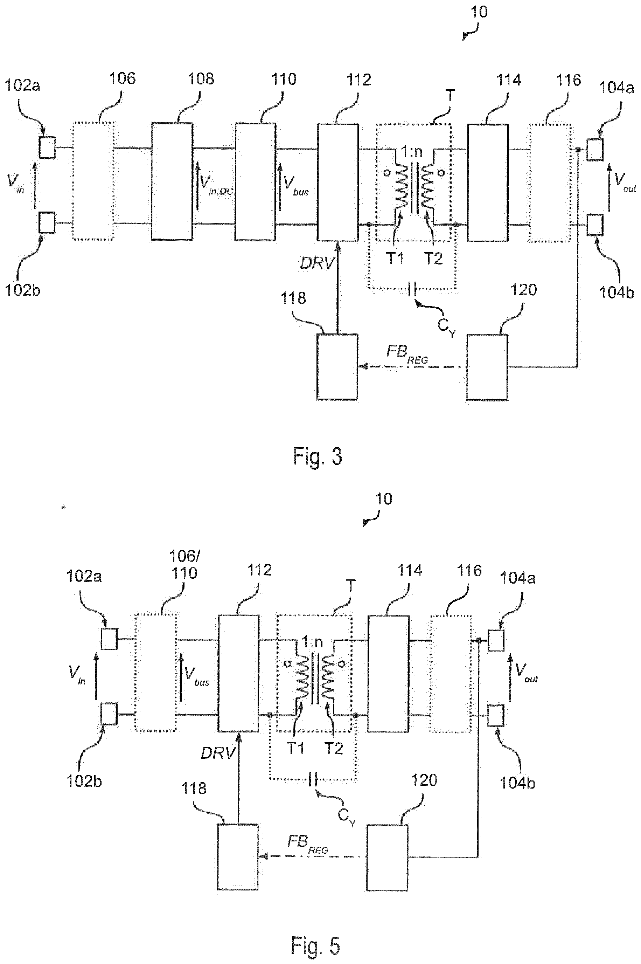

For example, Figure 3 shows the operating arrangement of an isolated electronic converter 10.

In this case converter 10 includes, between the input terminals 102a and 102b and the primary winding T1 of transformer T, a rectifier circuit 108 and a switching stage 112.

Specifically, the input of the rectifier circuit 108, such as e.g. a diode bridge, is connected (e.g. directly) to the terminals 102a and 102b. Therefore, the rectifier circuit 108 receives at input the input voltage $V_{in}$ and provides at output a DC voltage $V_{in,DC}$. Generally speaking, between the input terminals 102a and 102b and the rectifier circuit 108 there may also be provided a filter circuit 106, configured to filter the noise produced by the electronic converter 10.

The switching stage 112 includes one or more electronic switches, adapted to selectively connect the terminals of primary winding T1 of transformer T to the voltage $V_{in,DC}$ provided by the rectifier circuit 108. Generally speaking, between the rectifier circuit 108 and the switching stage 112 there may be provided a filter circuit 110, such as e.g. a capacitor connected in parallel with the output terminals of the rectifier circuit 108. Therefore, in this case, the filter circuit 108 receives (e.g. directly) the voltage $V_{in,DC}$ and provides at output a filtered voltage, typically called bus voltage, $V_{bus}$. In this case, therefore, the switching stage 112 receives at input the voltage $V_{bus}$.

The alternated voltage on the secondary side of transformer T is then converted by means of a rectifier circuit 114, typically including one or more diodes (such as e.g. a diode bridge), into a DC voltage. Therefore, the input of the rectifier circuit 114 is connected (e.g. directly) to the terminals of the secondary winding T2 of transformer T, and provides at output a DC voltage/current which, in the simplest of cases, corresponds to the output voltage/current $V_{out}/i_{out}$. Preferably, there is provided a filter circuit 116 connected between the output of the rectifier circuit 114 and the output of converter 10, i.e. the terminals 104a and 104b. Therefore, the filter circuit 116 is configured to stabilize the voltage provided by the rectifier circuit 114.

The various topologies (flyback, forward, resonant topologies and others) of switching electronic converters are well known, and the main topologies are described e.g. in L. Wuidart, "Application Note-Topologies For Switched Mode Power Supplies", STMicroelectronics, 1999.

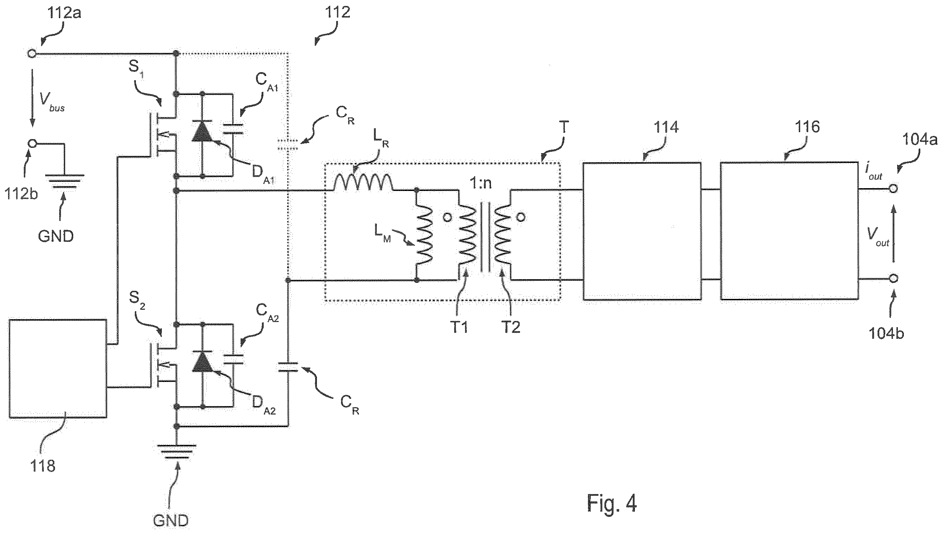

For example, Figure 4 shows a circuit diagram of an isolated half-bridge converter operating as a DC/DC converter. For the sake of simplicity, blocks 106, 108 and 110 have been omitted.

In the presently considered example, the switching stage 112 therefore receives at input, via two input terminals 112a/112, voltage $V_{bus}$.

Specifically, switching stage 112 includes a half-bridge, i.e. two electronic switches $S_1$ and $S_2$ which are connected in series between the two input terminals 112a/112b, wherein the switching of electronic switches $S_1$ e $S_2$ is driven by a control unit 118. For example, in the presently considered embodiment, such electronic switches $S_1$ and $S_2$ are Field-Effect Transistors, (FETs), for example MOSFETs (Metal-Oxide-Semiconductor Field-Effect Transistors), such as e.g. n-channel FETs. Such switches $S_1$ and $S_2$ may have, connected in parallel thereto, respective capacitances $C_{A1}$, $C_{A2}$ (such as e.g. the parasitic capacitances of the FETs) and respective diodes $D_{A1}$, $D_{A2}$ (such as e.g. the body diodes of the FETs).

Typically, the control unit 118 is configured to switch switches $S_1$ and $S_2$ alternatively, i.e. only one of the switches $S_1$ and $S_2$ is closed at a given time. Generally speaking, it is also possible to provide intermediate intervals, wherein neither switch, $S_1$ or $S_2$, is closed.

In the presently considered example, the switching stage is therefore connected to transformer T, which includes a primary winding T1 and a secondary winding T2. Specifically, transformer T may be ideally modelled as having a given turn ratio 1:n, an inductance $L_M$ which represents the magnetization inductance of transformer T and an inductance $L_R$ which represents the leakage inductance, which are shown in Figure 4 on the primary side of transformer T.

In the presently considered example, the primary winding T1 and at least one capacitor $C_R$ are connected in series between the intermediate point between both electronic converters $S_1$ and $S_2$ and the first input terminal 112a (positive terminal) and/or the second input terminal 112b (negative terminal, representing a ground GND). Specifically, in the presently considered example, the first terminal of the primary winding T1 of transformer T is connected (e.g. directly) to the intermediate point between both electronic switches $S_1$ and $S_2$. On the other hand, the second terminal of the primary winding T1 of transformer T is connected, through at least one capacitor $C_R$, to the first input terminal 112a and/or to the second input terminal 112b / to ground GND. Therefore, the switches $S_1$ and $S_2$ may be used to selectively connect the first terminal of the primary winding T1 of transformer T to voltage $V_{bus}$ or to ground GND, thereby controlling the current flow through the primary winding T1 of transformer T.

As previously stated, on the secondary side T2 of transformer T, the converter includes a rectifier circuit 114, configured to convert the alternated current (AC) supplied by the secondary winding T2 into a direct current (DC), and preferably a filter circuit 116 which stabilizes the signal supplied by the rectifier circuit 114, so that the output voltage $V_{out}$ and/or the output current $i_{out}$ are more stable.

For example, the operation of said electronic converter and of possible rectifier circuits 114 (with the optional additional use of a transformer with an intermediate connection) and filter circuits 116 are described in document PCT/IB2016/055923, the content whereof is incorporated in the present description for reference.

In a switching converter, transformer T therefore receives, on the primary side, an alternated voltage which has a switching frequency determined by means of the switching stage 112. Typically, the switching frequency is between 1 kHz and 200 kHz, preferably between 20 kHz and 200 kHz.

Therefore, the electronic converter 10 also includes a control circuit 118, configured to generate one or more drive signals $DRV$ for driving the switching stage 112, so that the output voltage $V_{out}$ or the output current $i_{out}$ may be regulated to a desired value. Generally speaking, the control circuit 118 may be any analog and/or digital circuit, such as e.g. a microprocessor programmed via software code.

To this end, as shown in Figure 3, a feedback circuit 120 is typically used which provides a feedback signal $FB_{REG}$ determined as a function of the output voltage $V_{out}$ (for a voltage generator) or of the output current $i_{out}$ (for a current generator).

Generally speaking, control circuit 118 may also be configured to regulate the brightness of lighting module 20 according to a so-called dimming function. If the electronic converter 10 supplies a regulated current $i_{out}$, control circuit 118 may therefore employ a width modulation, in order to directly vary the width of such regulated current $i_{out}$ as a function of a dimming control signal.

Generally speaking, as shown in Figure 5, the electronic converter 10 may also be a DC/DC converter. In this case, the input terminals 102a and 102b are connected to a DC voltage generator, such as e.g. a battery, or the input voltage $V_{in}$ is a DC voltage. In this instance, the presence of a rectifier circuit 108 is not mandatory, and the optional filter circuits 106 and 110 may be combined into one single filter circuit. For the rest, the architecture corresponds to what shown in Figure 3.

Therefore, as stated in the foregoing, due to the presence of a transformer T, a feedback circuit 120 is required which is adapted to transmit a regulation/feedback signal $FB_{REG}$ through the insulation barrier created by transformer T.

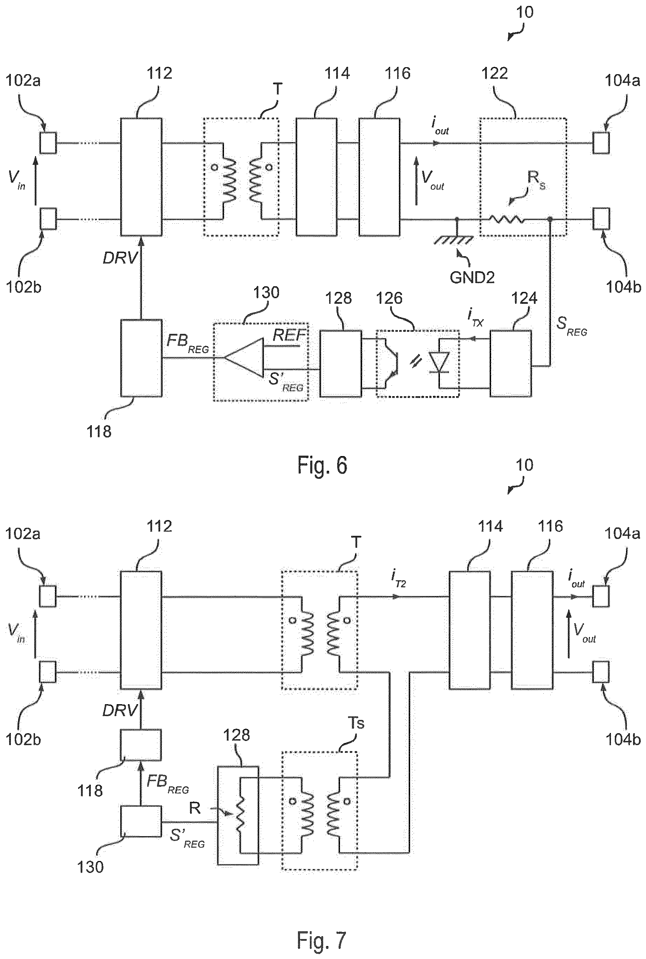

In this respect, Figure 6 shows a possible solution for said feedback circuit 120.

In the presently considered example, the feedback circuit 120 includes:

- a measurement circuit 122, configured to generate a measurement signal $S_{REG}$ indicative of the output voltage $V_{out}$ or of the output current $i_{out}$;
- an optocoupler/optoisolator 126, including e.g. a LED and a phototransistor;
- a transmission circuit 124, configured to drive the optocoupler 126 as a function of the signal $S_{REG}$; and
- a receiver circuit 128, configured to monitor the output of optocoupler 126 in order to detect signal $S_{REG}$.

Specifically, in Figure 6, the feedback circuit includes a measurement circuit 122, configured to generate a signal $S_{REG}$ indicative of the output current $i_{out}$. For instance, in the presently considered example, the negative terminal of filter circuit 116 (which is typically directly connected to the negative output terminal of the rectifier circuit 114) corresponds to the ground GND2 of the secondary side. In the presently considered example, a so-called shunt resistor $R_S$ is connected (e.g. directly) between ground GND2 and the negative output terminal 104b, while the positive output terminal 104a is connected (e.g. directly) to the positive output terminal of filter circuit 116. Therefore, the voltage at shunt resistor $R_S$ may be used as a signal $S_{REG}$, because said voltage is indicative of the output current $i_{out}$.

Therefore, the driver circuit 124 receives the signal $S_{REG}$ and generates a corresponding current $i_{TX}$ for driving the optocoupler 126. On the other hand, the receiver circuit 128 generates a signal $S'_{REG}$ by monitoring the voltage at the output of optocoupler 126, which is indicative of current $i_{TX}$.

Typically, the feedback circuit also includes a regulation unit 130, configured to generate the regulation signal $FB_{REG}$ as a function of the signal $S_{REG}$. The regulation unit 130 is often an error amplifier 130, typically in the form of a PI (Proportional-Integral) regulator or a PID (Proportional-Integral-Derivative) regulator, which compares the transmitted value with a reference signal $REF$. As an alternative, the regulation unit 130 may be a comparator, typically a comparator with hysteresis, configured to generate the regulation signal $FB_{REG}$ by comparing the signal $S_{REG}$ with a plurality of reference signals $REF$, typically a lower threshold and an upper threshold.

Generally speaking, the regulation unit 130 may also be integrated into the control circuit 118, e.g. in the form of a dedicated software module and/or hardware module of a microcontroller.

Moreover, the regulation unit 130 may be located on the secondary side of the electronic converter, and the transmission circuit 124 may transmit the regulation signal $FB_{REG}$. Typically, the regulation unit 130 is on the side where the reference signal (s) $REF$ are generated. For example, the regulation unit 130 is typically on the primary side if the reference signal(s) $REF$ are provided by the control circuit 118.

Generally speaking, also other current sensors 120 may be used. Moreover, the optocoupler 126 may also be replaced by other transmitting and receiving means, which may be optical, capacitive or inductive.

For instance, Figure 7 shows an example providing the addition of a current transformer Ts, including a first and a second winding. Specifically, in the presently considered example, the second winding of current transformer Ts is connected in series with the secondary winding T2 of transformer T, i.e. the secondary winding of current transformer Ts is traversed by current $i_{T2}$ which flows through the secondary winding T2, and the first winding of current transformer Ts is traversed by a current which is proportional to current $i_{T2}$.

Converter 10 moreover includes a receiver circuit 128, configured to sense the current flowing through the first winding of current transformer Ts. For example, in the simplest of cases a resistor R may be employed for this purpose. Therefore, in the presently considered example, receiver circuit 128 supplies a signal $S'_{REG}$ indicative of the current $i_{T2}$ flowing through the secondary winding T2 of transformer T. For example, the operation of said current transformer Ts and of the current measurement circuit 128 is described in document WO 2017/122129 A1, the content whereof is incorporated herein for reference.

As previously stated, said signal $S'_{REG}$ is supplied to a regulation circuit 130, which generates a signal $FB_{REG}$ which is used by control circuit 118 for driving the switching stage 112.

Therefore, these solutions sense the current $i_{out}$, or anyway a value indicative of said current $i_{out}$ (for example current $i_{T2}$ supplied by the secondary winding T2, or the current supplied by the rectifier circuit 114) directly on the secondary side T2 of transformer T, and transmit a respective value to the primary side of transformer T.

Generally speaking, solutions are also known which estimate the current on the secondary side T2 of the transformer, e.g. the current $i_{T2}$ supplied by secondary winding T2, as a function of values which can be measured on the primary side T1 of the transformer. For example, this is comparatively easy in topologies wherein the current flowing through the primary winding of transformer T has a substantially triangular shape. However, this is not possible in resonant converters, because the current on the primary side also includes additional oscillations.

Accordingly, the present application relates to an electronic converter with a measurement circuit according to the preamble of Claim 1, which is known, e.g. from document US 9 203 318 B2. Documents US 2010/020578 A1, US 2015/109824 A1, US 2012/236610 A and US 2011/228566 A1 may also be of interest for the present application.

Object and Summary

The present description aims at providing solutions for measuring / estimating the current on the secondary side of the transformer directly on the primary side of the transformer.

According to various embodiments, said object is achieved thanks to an electronic converter having the features set forth in the claims that follow. The claims also concern a corresponding lighting system.

The claims are an integral part of the technical teaching provided herein with reference to the invention.

As previously stated, various embodiments concern an electronic converter. Generally speaking, the electronic converter includes a transformer, a switching stage, a measurement circuit and a driver circuit.

In various embodiments, the transformer includes a primary winding and a secondary winding, wherein the transformer includes a magnetization inductance and a leakage inductance, so that the current flowing through the primary winding corresponds to the sum of the magnetization current flowing through the magnetization inductance and a current which is proportional (as a function of the number of windings of the transformer) to the current flowing through the secondary winding of the transformer.

In various embodiments, the switching stage is configured to selectively transfer energy from two input terminals to the primary winding of the transformer. For example, in various embodiments, the switching stage includes two electronic switches, connected in series between both input terminals, wherein the primary winding of the transformer and a capacitor are connected in series between the intermediate point between both electronic switches and one of the input terminals.

In various embodiments, the measurement circuit is configured to determine a measurement signal indicative of the current flowing through the secondary winding of the transformer.

In various embodiments, the driver circuit is configured to drive the switching stage as a function of the measurement signal. Specifically, the driver circuit is configured to:

- during a first interval, apply a positive voltage to the primary winding of the transformer, so that the magnetization current increases substantially linearly, and
- during a second interval, apply a negative voltage to the primary winding of the transformer, so that the magnetization current decreases substantially linearly.

In various embodiments, the electronic converter may include a resonant circuit, so that the current flowing through the secondary winding of the transformer includes, during the first interval and/or the second interval, an oscillation having a period lower than twice the duration of the respective interval.

In various embodiments, the measurement circuit includes an inductive element connected in series to the primary winding of the transformer, so that the inductive element is traversed by the current flowing through the primary winding of the transformer. The inductive element includes a first node and a second node, which supply a first voltage proportional to the derivative of the current flowing through the inductive element, so that (as the first voltage includes the sum of the derivative of the magnetization current and of the current which is proportional to the current flowing through the secondary winding of the transformer), the first voltage includes a first offset during the first interval and a second offset during the second interval. For example, the inductive element may be an inductor connected in series with the primary winding of the transformer, wherein the first node and the second node correspond to the terminals of the inductor. As an alternative, the inductive element may be a further transformer including a first and a second winding, wherein the first winding of the further transformer is connected in series to the primary winding of the transformer, and the first node and the second node correspond to the terminals of the second winding of the further transformer.

In various embodiments, the measurement circuit also includes an offset cancellation circuit, configured to generate a second voltage by cancelling the first offset and/or the second offset from the first voltage. For example, in various embodiments, the offset cancellation circuit includes a first and a second terminal, wherein the second terminal is connected to the second node of the inductive element. The offset cancellation circuit moreover includes means for generating an auxiliary voltage at the first and second terminals, wherein the means for generating the auxiliary voltage are configured to generate a negative voltage during the first interval and/or a positive voltage during the second interval. The offset cancellation circuit moreover includes two resistors, connected in series between the first terminal and the first node of the inductive element, wherein the second voltage corresponds to the voltage between the intermediate point between both resistors and the second node. For example, the means for generating the auxiliary voltage may include a voltage regulator, a voltage divider or an auxiliary winding of the transformer.

In various embodiments, the measurement circuit moreover includes an integrator, configured to generate the measurement signal by integrating the second voltage. For example, an analog integrator may include a resistor and a capacitor, connected in series between the second voltage, wherein the voltage at the capacitor corresponds to the measurement signal.

In various embodiments, the electronic converter includes two output terminals and a rectifier and filter circuit, connected between the secondary winding of the transformer and both output terminals.

In various embodiments, the rectifier circuit may inhibit an energy transfer to both output terminals during the first interval. In this case, the electronic converter may include an enable circuit, configured to disable the measurement circuit during the first interval.

Alternatively, the rectifier circuit is configured to inhibit an energy transfer to both output terminals during the second interval. In this case, the electronic converter may therefore include an enable circuit, configured to disable the measurement circuit during the second interval.

Brief Description of the Annexed Views

Embodiments will now be described, by way of non-limiting example only, with reference to the annexed views, wherein:

- Figures 1 to 7 have already been described in the foregoing,
- Figure 8 shows an embodiment of an electronic converter with a current measurement circuit according to the present description;
- Figures 9 to 11 show embodiments of the measurement circuit of Figure 8;
- Figure 12 shows a first embodiment of an electronic converter according to the present description;
- Figure 13 shows a second embodiment of an electronic converter according to the present description;
- Figures 14a to 14i show exemplary waveforms of the electronic converters of Figures 12 and 13;
- Figure 15 shows a third embodiment of an electronic converter according to the present description;
- Figures 16a to 16i show exemplary waveforms of the electronic converter of Figure 15;
- Figure 17 shows a fourth embodiment of an electronic converter according to the present description;
- Figure 18 shows a fifth embodiment of an electronic converter according to the present description;
- Figures 19a to 19e show exemplary waveforms of the electronic converter of Figure 18; and
- Figure 20 shows a sixth embodiment of an electronic converter according to the present description.

Detailed Description of Embodiments

In the following description, various specific details are given to provide a thorough understanding of the embodiments. The embodiments may be practiced without one or several specific details, or with other methods, components, materials, etc. In other instances, well-known structures, materials or operations are not shown or described in detail in order to avoid obscuring various aspects of the embodiments.

Reference throughout this description to "one embodiment" or "an embodiment" means that a particular feature, structure, or characteristic described in connection with the embodiment is included in at least one embodiment. Thus, the possible appearances of phrases such as "in one embodiment" or "in an embodiment" in various places throughout this description are not necessarily all referring to the same embodiment. Furthermore, particular features, structures, or characteristics may be combined in any suitable manner in one or more embodiments.

The headings provided herein are for convenience only, and therefore do not interpret the extent of protection or scope of the embodiments.

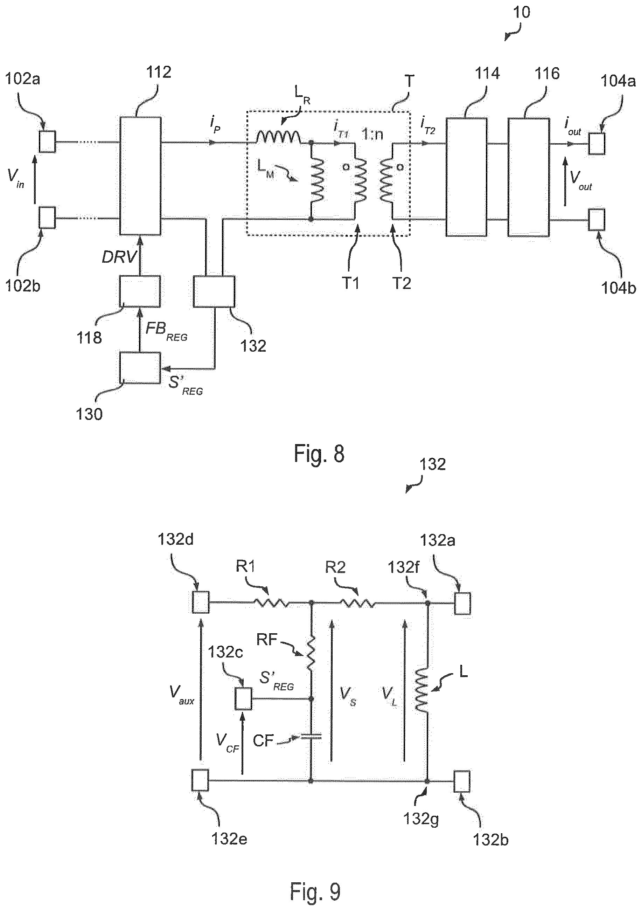

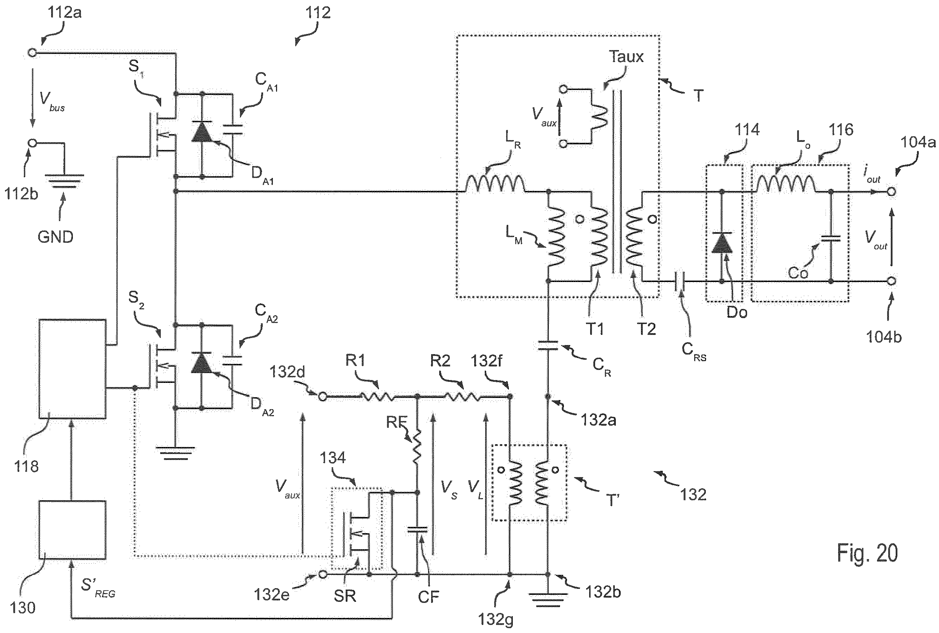

In the following Figures 8 and 20, the parts, elements or components which have already been described with reference to Figures 1 to 7 are denoted with the same references which have previously been used in said Figures; the description of said previously described elements will not be repeated in the following, in order not to overburden the present detailed description.

As previously mentioned, the present description provides solutions for measuring/estimating the current $i_{T2}$ on the secondary side T2 of a transformer of an isolated electronic converter 10, directly on the primary side T1 of transformer T. For the general description of said electronic converter reference may therefore be made to the descriptions of Figures 1 to 7.

For example, Figure 8 shows a first embodiment of an electronic converter 10.

Specifically, the electronic converter 10 includes, on the primary side T1, at least one switching stage 112, and optionally a filter circuit 110. If input voltage $V_{in}$ is an alternated voltage, the electronic converter 10 may also include a rectifier circuit 108 and optionally an input filter 106 (also see the description of Figure 3). On the contrary, on the secondary side T2, the electronic converter 10 includes a rectifier circuit 114 and optionally a filter circuit 116.

In this case, too, transformer T may be modelled as an ideal transformer having a given turn ratio 1:n, an inductance $L_M$ representing the magnetization inductance of transformer T and an inductance $L_R$ representing the leakage inductance, which again are shown on the primary side of transformer T.

In order to perform the regulation, e.g. in order to regulate the output current $i_{out}$ to a desired value and/or in order to monitor the load connected to the output terminals 104a/104b, the electronic converter 10 includes a measurement circuit 132 connected in series with the primary winding T1 of transformer T. Therefore, in the presently considered embodiment, the current $i_P$ flowing through the primary winding T1 of transformer T also flows through the measurement circuit 132. Specifically, such a measurement circuit 132 is configured to generate a measurement signal $S'_{REG}$ indicative of the current $i_{T2}$ supplied by the secondary winding T2 of transformer T.

For example, similar to the previously description, converter 10 may include a regulation circuit 130, configured to generate a regulation signal $FB_{REG}$ as a function of said measurement signal $S'_{REG}$, and a control unit 118 configured to generate one or more drive signals $DRV$ for the switching stage 112, as a function of the regulation signal $FB_{REG}$.

Specifically, the inventor has observed that the current $i_P$ flowing through the primary side T1 comprises not only current $i_{T1} = i_{T2} \cdot n$, but also a part deriving from current $i_{LM}$ flowing through the magnetization inductance $L_M$ of transformer T, i.e.:

$$i_P = i_{LM} + i_{T1} \qquad (1)$$

Therefore, in order to enable a correct measurement / estimation of current $i_{T2}$, it is necessary to remove current $i_{LM}$ from current $i_P$ again.

Therefore, in the presently considered embodiment, the measurement circuit is configured to generate a measurement signal $S'_{REG}$ indicative of $(i_P - i_{LM})$. Therefore, said measurement signal $S'_{REG}$ is also indicative of the current $i_{T2}$ supplied by secondary winding T2 of transformer T.

As previously stated, said measurement circuit 132 is particularly useful in resonant electronic converters, because the current $i_{T2}$ on the secondary side T2 does not have a triangular shape, as it is the case e.g. in an ideal flyback converter, but there are also oscillations which do not enable a simple estimation of the behavior of current $i_{T2}$, e.g. as a function of the peak / the maximum value of current $i_P$.

Figures 9, 10 and 11 show possible embodiments of the measurement system 132.

In the presently considered embodiments, the measurement circuit 132 includes:

- two terminals 132a and 132b, for the connection in series thereof with the primary winding T1;
- a terminal 132c, in order to supply the measurement signal $S'_{REG}$;
- two terminals 132d and 132e, in order to receive an auxiliary voltage $V_{aux}$.

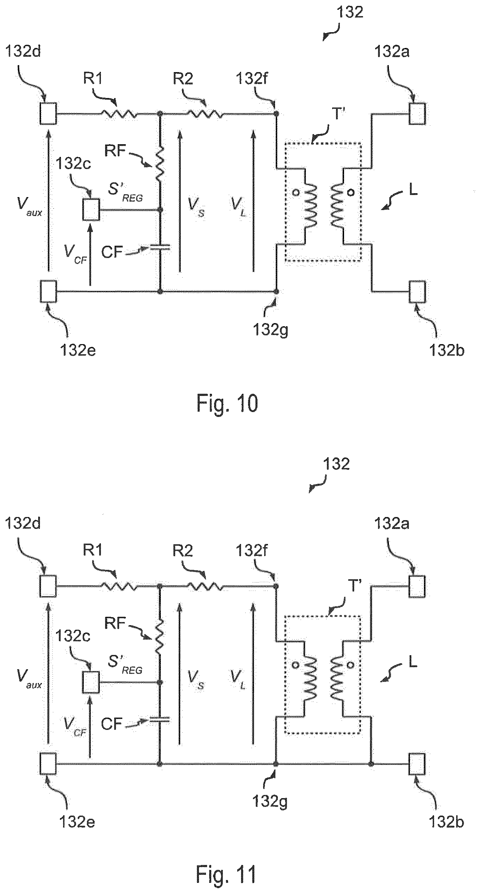

In the presently considered embodiment, the measurement circuit 132 includes an inductive element L connected in series between terminals 132a and 132b. Generally speaking, the inductive element L may be an inductor (see Figure 9) or a transformer T' (see Figures 10 and 11). Generally speaking, the inductive element L therefore includes two nodes 132f and 132g, which supply a voltage $V_L$ indicative of current $i_P$ flowing through the inductive element L. For example, this voltage $V_L$ corresponds:

- when an inductor is used, to the voltage between terminals 132a and 132b (see Figure 9); or
- when a transformer T' is used, wherein a first winding is connected between terminals 132a and 132b, to the voltage at terminals 132f and 132g of the second winding of transformer T'; generally speaking, said transformer T may generate an insulation barrier (see Figure 10), or else the first winding may be connected to the second winding, e. g. node 132g may be connected to terminal 132b.

As previously stated, the measurement circuit should remove the magnetization current $i_{LM}$ from current $i_P$ again. Specifically, current $i_P$ which also flows through inductive element L (which operates as an analog differentiator) generates voltage $V_L$ at terminals 132f and 132g of the inductive element L as a function of current $i_P$:

$$V_L = L \cdot \frac{di_P}{dt} \qquad (2)$$

that is (by combining Equation 2 with Equation 1):

$$V_L = L\left(\frac{di_{LM}}{dt} + \frac{di_{T1}}{dt}\right) \qquad (3)$$

The inventor has observed that the magnetization current $i_{LM}$ typically shows a substantially linear (rising and falling) behaviour, because in an electronic converter there is typically applied a substantially square-wave voltage with a constant width to the primary winding T1, i.e. the contribution $di_{LM}/dt$ is substantially constant. Voltage $V_L$ therefore corresponds to an offset (which might vary for the rising and the falling stages) deriving from the magnetization current $i_{LM}$ and a contribution deriving from current $i_{T1}$.

Current $i_{T1}$ (and therefore also $i_{T2}$) may therefore be determined by cancelling the offset from voltage $V_L$ (and therefore by eliminating the contribution of the magnetization current $i_{LM}$) and by integrating the resulting waveform again.

In the embodiments shown in Figures 9 to 11, the offset in voltage $V_L$ is cancelled via the auxiliary voltage $V_{aux}$. For example, in the presently considered embodiment, two resistors R1 and R2 are connected (e.g. directly) in series between terminal 132d and node 132f of the inductive element L, and terminal 132d is connected (e.g. directly) to node 132g of inductive element L. Therefore, by properly sizing voltage $V_{aux}$, the voltage $V_S$ at the intermediate point between resistors R1 and R2 (with reference to node 132f / terminal 132e) corresponds to voltage $V_L$, wherein the offset generated by current $i_{LM}$ has been cancelled. Generally speaking, it is also possible to use other means in order to cancel the offset in voltage $V_L$.

In the presently considered embodiment, voltage $V_S$ is then supplied to an integrator, which may be analog or digital. For example, in the simplest of cases, an analog integrator may be implemented via a filter RC including a resistor $R_F$ and a capacitor $C_F$, which are connected between voltage $V_S$, e.g. between the intermediate point between the resistors R1 and R2, and the node 132g / the terminal 132e. For example, in the presently considered embodiment, a first terminal of resistor $R_F$ is connected (e.g. directly) to the intermediate point between resistors R1 and R2, a second terminal of resistor $R_F$ is connected (e.g. directly) to a first terminal of capacitor $C_F$, and the second terminal of capacitor $C_F$ is connected (e.g. directly) to terminal 132g. Generally speaking, it is also possible to use other analog integrators, optionally including an operational amplifier. As an alternative, voltage $V_S$ may be supplied to an analog-digital converter and to a digital processing circuit, such as the regulator circuit 130, which is configured to implement a digital integrator, e.g. by suitably programming a microprocessor.

Therefore, the analog or digital integrator supplies a signal $S'_{REG}$ indicative of the integral of voltage $V_S$. For example, in the presently considered embodiment, the measurement signal $S'_{REG}$ corresponds to the voltage at capacitor $C_F$.

The operation of these measurement circuits 132 will now be described with reference to some typical electronic converters.

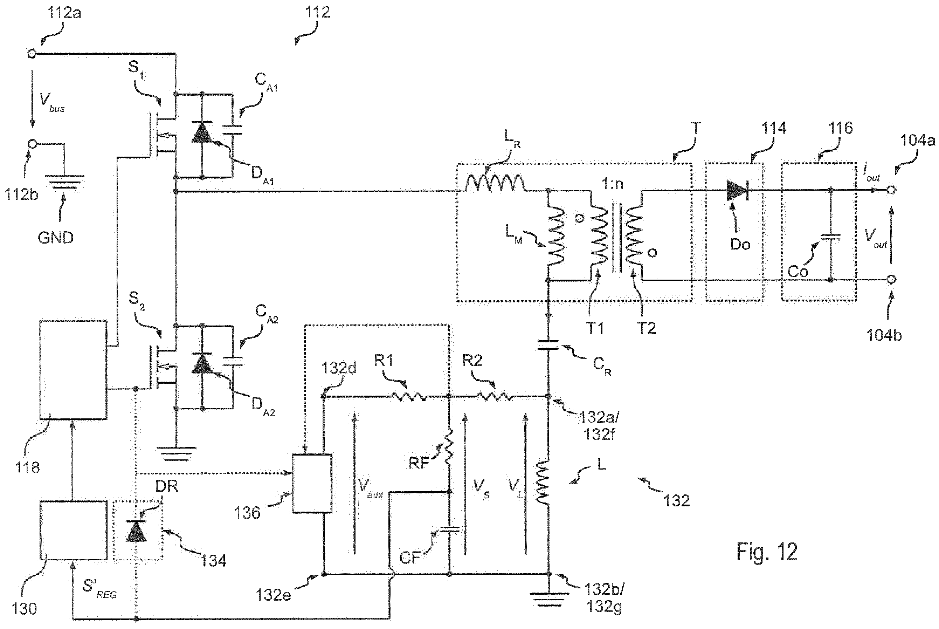

For example, Figure 12 once again shows a half-bridge isolated electronic converter, as described with reference to Figure 4.

In the presently considered embodiment, the switching stage 112 therefore receives at input, via two input terminals 112a/112b, voltage $V_{bus}$ (also see the description of Figures 3 and 5). Specifically, the switching stage 112 includes a half-bridge, i.e. two electronic switches $S_1$ and $S_2$ which are connected in series between both input terminals 112a/112b, wherein the switching of the electronic switches $S_1$ and $S_2$ is driven by a control unit 118. For example, in the presently considered embodiment, said electronic switches $S_1$ and $S_2$ are Field-Effect Transistors (FETs), for example MOSFETs (Metal-Oxide-Semiconductor Field-Effect Transistors), such as e.g. n-channel FETs. Said switches $S_1$ and $S_2$ may have respective capacitances $C_{A1}$, $C_{A2}$ and respective diodes $D_{A1}$, $D_{A2}$ connected in parallel thereto. For example, capacitances $C_{A1}$ and $C_{A2}$ may represent the intrinsic capacitances of a MOSFET, or they may be implemented via additional capacitors, which are connected in parallel with the switches $S_1$ e $S_2$. On the other hand, diodes $D_{A1}$ and $D_{A2}$ may represent the body diodes of a MOSFET, and/or may be implemented via additional diodes.

In the presently considered embodiment, the control unit 118 is configured to switch switches $S_1$ and $S_2$ alternatively, i.e. only one of the switches $S_1$ and $S_2$ is closed at a given moment. Generally speaking, also intermediate intervals may be provided, wherein neither switch $S_1$ or $S_2$ is closed, e.g. in order to implement a zero-voltage switching (ZVS).

In the presently considered embodiment, the switching stage is therefore connected to transformer T, which includes a primary winding T1 and a secondary winding T2.

In the presently considered embodiment, the primary winding T1 of transformer T and at least one capacitor $C_R$ are connected in series between the intermediate point between both electronic switches $S_1$ and $S_2$ and the first input terminal 112a (positive terminal) and/or the second input terminal 112b (negative terminal, representing a ground GND). Therefore, switches $S_1$ and $S_2$ may be used in order to selectively connect the first terminal of primary winding T1 of transformer T to voltage $V_{bus}$ or to ground GND, thereby controlling the flow of current $i_P$ across primary winding T1 of transformer T.

As previously stated, on the secondary side T2 of transformer T, the converter includes a rectifier circuit 114, configured to convert the alternated current $i_{T2}$, provided by secondary winding T2, into a direct current (DC), and preferably a filter circuit 116 which stabilizes the signal supplied by the rectifier circuit 114, so that the output $V_{out}$ and/or the output current $i_{out}$ are more stable.

In the presently considered embodiment, converter 10 also includes a measurement circuit 132, wherein the terminals 132a and 132b are connected in series with the primary winding T1 of transformer T. For example, the presently considered embodiment employs the measurement circuit shown with reference to Figure 9.

Specifically, the presently considered embodiment employs only one capacitor $C_R$. In other words, the first terminal of the primary winding T1 of transformer T is connected (e.g. directly) to the intermediate point between both electronic switches $S_1$ and $S_2$. On the other hand, the second terminal of the primary winding T1 of transformer T is connected, via a capacitor $C_R$, to the second input terminal 112b / to ground GND. Therefore, in the presently considered embodiment, the primary winding T1 and the capacitor $C_R$ are connected in series between the intermediate point between both electronic switches $S_1$ and $S_2$ and the second input terminal 112b, and the measurement circuit 132 may be connected, for example:

- between the intermediate point between both electronic switches $S_1$ and $S_2$ and the first terminal of primary winding T1;
- between the second terminal of primary winding T1 and capacitor $C_R$; or
- between capacitor $C_R$ and the second input terminal 112b.

As a matter of fact, it is generally sufficient for the measurement circuit to be traversed by the current $i_P$, which also flows through the primary winding T1.

For example, in the presently considered embodiment, terminals 132a and 132b of the measurement circuit are connected between capacitor $C_R$ and the second input terminal 112b, i.e. terminal 132b is connected to ground. In the presently considered embodiment, terminal 132e is therefore also connected to ground GND. Said connection offers the advantage that also signal $S'_{REG}$ is referred to ground GND.

In the presently considered embodiment, the electronic converter 10 employs only one diode Do for the rectifier circuit 114. Therefore, in this case, the rectifier circuit only transfers the positive waves towards output 104a/104b.

Therefore, the electronic converter shown in Figure 12 includes two resonant circuits. The former includes the inductances of the transformer ($L_R + L_M$), connected in series with capacitor $C_R$, and the latter only includes the leakage inductance $L_R$, connected in series with capacitor $C_R$. Specifically, considering that the magnetization inductance typically has a high value, the resonance frequency of the first resonant circuit is low compared with the frequency of the switching stage 112, which determines substantially linear increases and decreases of current $i_{LM}$. On the other hand, the second resonant circuit is only active when energy is also transferred to the secondary side, i.e. when current $i_{T2}$ is other than zero. For example, in a traditional electronic converter the capacitance of capacitor $C_R$ is high, and therefore also the second resonance has a low resonance frequency. On the other hand, when the leakage inductance $L_R$ and the capacitor $C_R$ are suitably sized, converter 10 operates as a resonant converter, i.e. current $i_P$ includes an oscillation which exhibits a frequency higher than the switching frequency of the converter. Specifically, in a resonant converter, the oscillation typically has a period lower than twice the duration of the respective interval, i.e. the current $i_P/i_{T2}$ includes at least a half-period of the oscillation.

For this reason, integrator RF/CF should have a time constant $\tau = RF \cdot CF$ comparable with the oscillation period of the converter, e.g. the oscillation generated by $L_R$ and $C_R$ for the considered converter.

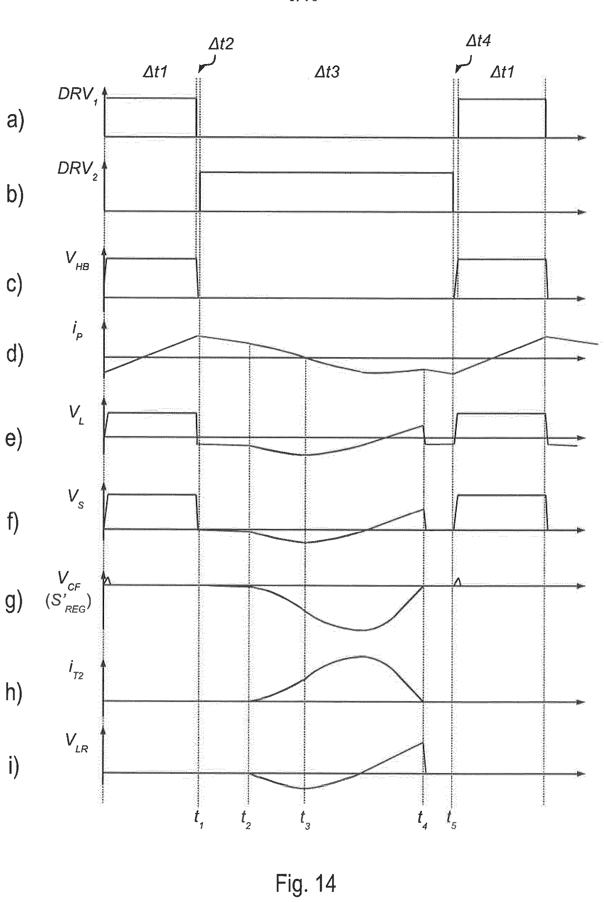

For example, Figures 14a to 14i show some waveforms of the circuit of Figure 12, specifically:

a) drive signal $DRV_1$ for switch $S_1$,
b) drive signal $DRV_2$ for switch $S_2$,
c) voltage $V_{HB}$ at the intermediate point of the half-bridge, which corresponds e.g. to voltage $V_{DS}$ of FET $S_2$,
d) current $i_P$ flowing through the primary side of transformer T,
e) voltage $V_L$ across inductive element L of measurement circuit 132, e.g. of the measurement inductor;
f) voltage $V_S$ across filter RC ($R_F$ and $C_F$) of measurement circuit 132;
g) voltage $V_{CF}$ across capacitor $C_F$ of measurement signal 132, i.e. signal $S'_{REG}$;
h) current $i_{T2}$ flowing through the secondary winding T2 of transformer T; and
i) voltage $V_{LR}$ across the leakage inductance $L_R$ of transformer T.

In the presently considered embodiment, the control unit 118 is configured to drive the half-bridge switches $S_1$ and $S_2$ via signals $DRV_1$ and $DRV_2$ with the following steps, which are periodically repeated:

- during a first time interval $\Delta t1$ switch $S_1$ is closed and switch $S_2$ is open;
- during a second time interval $\Delta t2$ switch $S_1$ is open and switch $S_2$ is open;
- during a third time interval $\Delta t3$ switch $S_1$ is open and switch $S_2$ is closed; and
- during a fourth time interval $\Delta t4$ switch $S_1$ is open and switch $S_2$ is open.

Substantially, as it is well known, intervals $\Delta t2$ and $\Delta t4$ may be useful for the zero-voltage switching of switches $S_1$ and $S_2$ (see Figure 14c). Specifically, the condition for a zero-voltage switching of switch $S_2$ may be obtained if current $i_P$ is positive at the end of interval $\Delta t1$, so that current $i_P$ discharges capacitance $C_{A2}$ and brings voltage $V_{HB}$ to zero. On the other hand, the condition for zero voltage switching of switch $S_1$ may be obtained if current $i_P$ is negative at the end of interval $\Delta t3$, so that current $i_P$ charges the capacitance $C_{A2}$ and brings voltage $V_{HB}$ to the value of the voltage $V_{bus}$.

The control unit 118 may regulate the energy transfer to the secondary side by regulating the ratio between the durations of intervals $\Delta t1$ and $\Delta t3$. Specifically, when switch $S_1$ is closed and switch $S_2$ is open ($\Delta t1$), voltage $V_{HB}$ substantially corresponds to the input voltage $V_{bus}$. In this condition, the diode Do of rectifier 114 is reverse biased, i.e. it is open. As a consequence, transformer T is only traversed by a magnetization current $i_{LM}$, i.e. the currents $i_{T1}$ and $i_{T2}$ are zero and $i_P = i_{LM}$. During this step, current $i_P$ thus increases substantially linearly (see Figure 14d). Specifically, at instant ($t_5$) when switch $S_1$ is closed, typically the value of current $i_P$ is negative, which enables the achievement of the ZVS condition.

For this reason, voltage $V_L$ includes a first given (positive) offset $O1$, which is substantially constant during interval $\Delta t1$.

On the other hand, during interval $\Delta t3$ switch $S_1$ is open and switch $S_2$ is closed.

Specifically, when switch $S_2$ is closed at instant $t_1$, voltage $V_{T2}$ at the secondary winding corresponds to voltage $V_{CR}/n$ (as a function of the number of windings of transformer T) to capacitor CR.

As shown in Figure 14h, if the voltage at the secondary winding T2 is lower than the output voltage $V_{out}$, diode Do stays open and current $i_{T2}$ is typically zero. During this step, the current $i_P$ therefore decreases substantially linearly (see Figure 14d). For this reason, voltage $V_L$ includes a given second (negative) offset $O2$ which is substantially constant. However, although current $i_p$ decreases, current $i_P$ is positive, therefore charging capacitance CR.

As a consequence, at an instant $t_2$ the voltage at secondary winding T2 exceeds the output voltage $V_{out}$ and diode Do is forward biased. Therefore, from instant t2 the energy is transferred towards the output, and current $i_{T2}$ is positive.

For example, assuming a resonant converter, the current $i_{T2}$ will include an oscillation until current $i_{T2}$ reaches zero at an instant t4, and the diode is opened again. As previously stated, in the presently considered electronic converter, said resonance may be generated by suitably sizing the leakage inductance $L_R$ and the capacitance of capacitor $C_R$. Generally speaking, the interval $\Delta t3$ may end before or preferably after instant t4, so as to also implement the zero-current switching condition for diode Do.

Therefore, during the oscillation (between t1 and t3), current $i_P$ corresponds to the sum of current $i_{T1}$ (which in turn is proportional to current $i_{T2}$) and the magnetization current, i.e. $i_P = i_{T1} + i_{LM}$. For this reason, voltage $V_L$ includes the second (negative) offset $O2$ and a variable contribution deriving from the oscillation of current $i_{T2}$.

As previously stated, in order to reconstruct the behavior of current $i_{T2}$, the measurement circuit 132 should generate a voltage $V_S$ by removing the offset from voltage $V_L$, i.e.:

- offset $O1$ during interval $\Delta t1$; and
- offset $O2$ during interval $\Delta t3$.

As previously explained, the measurement circuit 132 employs the auxiliary voltage $V_{aux}$ in order to remove the offset from voltage $V_L$.

For example, in the presently considered embodiment, the electronic converter includes a voltage regulator 136, configured to generate the auxiliary voltage $V_{aux}$.

In various embodiments, said voltage regulator 136 is configured to generate different voltages $V_{aux}$ during the different operation steps, i.e.:

- a first auxiliary voltage $V_{aux1}$ for compensating offset $O1$ during interval $\Delta t1$; and
- a second auxiliary voltage $V_{aux2}$ for compensating offset $O2$ during interval $\Delta t3$.

For example, in order to determine interval $\Delta t1$ or interval $\Delta t3$, the voltage regulator 136 may monitor one or more drive signals *DRV* of the converter.

Generally speaking, if the rising (and respectively falling) gradient of the magnetization current $i_{LM}$ is constant, also the value of voltage $V_{aux1}$ (and respectively the value of voltage $V_{aux2}$) may be constant. However, said gradient is typically non-constant, and depends on the operating conditions of the converter.

For example, in various embodiments, the voltage regulator 136 may monitor the voltage $V_L$ and/or the voltage $V_S$, and may generate an auxiliary voltage $V_{aux}$ chosen in order to cancel the offset in voltage $V_S$. For example, for this purpose the electronic converter may measure the offset between instants $t1$ and $t2$ in order to generate the auxiliary voltage $V_{aux2}$, thereby cancelling offset $O2$. Similarly, the electronic converter may measure the offset during interval $\Delta t1$, in order to generate the auxiliary voltage $V_{aux1}$, thereby cancelling offset $O1$.

However, in the presently considered embodiment, the electronic converter is configured to transfer only the "negative" waves which are applied to the primary winding T1 (i.e. during interval $\Delta t3$). In this case, the measurement circuit 132 may thus be disabled while the positive waves are being applied to primary winding T1 (i.e. during interval

$\Delta t1$), and therefore only the compensation of offset *O2* is required, which depends on the (negative) gradient of the magnetization current during interval $\Delta t3$.

For example, in the presently considered embodiment, the converter also includes an enable circuit 134, which is configured to selectively enable or disable the output of measurement circuit 132 as a function of at least one of the drive signals *DRV* of switching stage 112. For example, in the presently considered embodiment, said enable circuit 134 is implemented with a diode DR connected between the measurement signal $S'_{REG}$ and the drive signal $DRV_2$, i.e. the measurement signal $S'_{REG}$ is substantially set to zero by the enable circuit 134 during interval $\Delta t1$, i.e. when switch $S_2$ is open.

Therefore, in the presently considered embodiment, the current generator generates a voltage always corresponding to $V_{aux} = V_{aux2}$, and as a consequence the measurement circuit 132 removes offset *O2* during interval $\Delta t3$, while during interval $\Delta t1$ the offset now corresponds to a *O1 + O2* (also see Figure 14f).

However, this is no problem for the presently considered electronic converter, because during interval $\Delta t1$ the measurement circuit 132 is disabled by the enable circuit 134. This is also visible in Figure 14g, wherein voltage $V_{CF}$ is substantially zero during interval $\Delta t1$, while voltage $V_{CF}$ corresponds to the integral of voltage $V_S$ during interval $\Delta t3$. Instead of disabling the measurement circuit, the regulation circuit may also simply neglect the value of the measurement signal during interval $\Delta t1$.

As previously explained, typically voltage $V_{aux2}$ may not be a fixed value, because offset O2 (for an energy transfer during stage $\Delta t3$) may be variable, e.g. as a function of the load connected to the terminals 104a and 104b.

However, the inventor has observed that the voltage at the capacitor $C_R$ is proportional to the load.

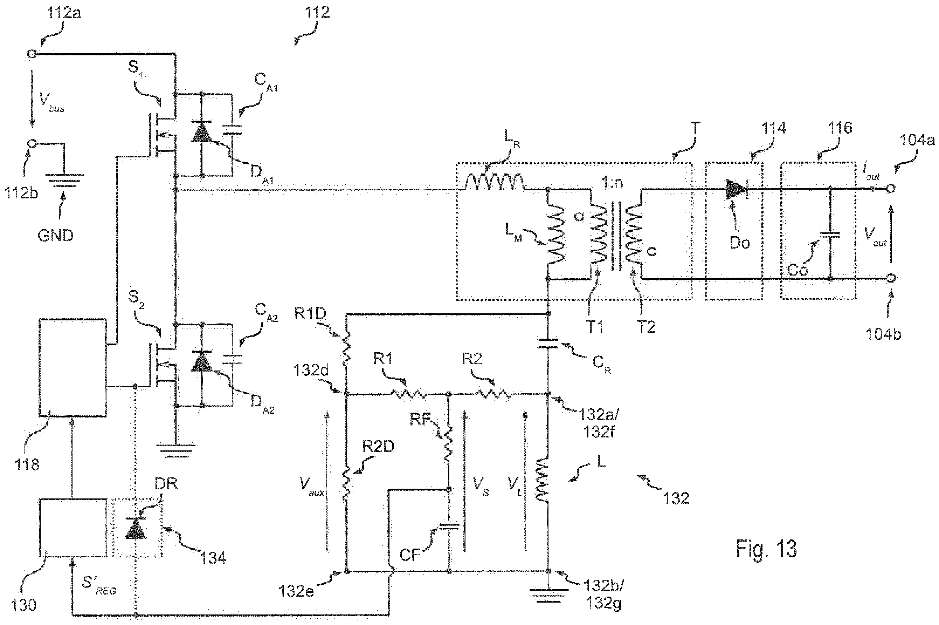

Figure 13 shows a second embodiment, wherein the converter determines the value of voltage $V_{aux2}$ as a function of the voltage at capacitor $C_R$. In the presently considered embodiment, the converter only generates voltage $V_{aux2}$ in order to compensate the offset *O2* during interval $\Delta t3$, while the measurement circuit 132 is disabled by circuit 134 during step $\Delta t1$. However, also in this case the converter might generate also voltage $V_{aux1}$, in order to compensate offset *O1*.

Specifically, in the presently considered embodiment, said voltage $V_{aux2}$ is obtained by a simple voltage divider including two resistors R1D and R2D, wherein the intermediate point between resistors R1D and R2D provides the auxiliary voltage $V_{aux} = V_{aux2}$. For example, in the presently considered embodiment, wherein also the auxiliary voltage is referred to ground GND, said divider R1D/R2D may be connected between the intermediate point between the primary winding T1 and capacitor $C_R$, and ground GND.

In the presently considered embodiment, voltage $V_{CF}$ is therefore proportional to current $i_{T2}$ (see Figures 13g and 13h), even though voltage $V_{CF}$ is reversed with respect to current $i_{T2}$.

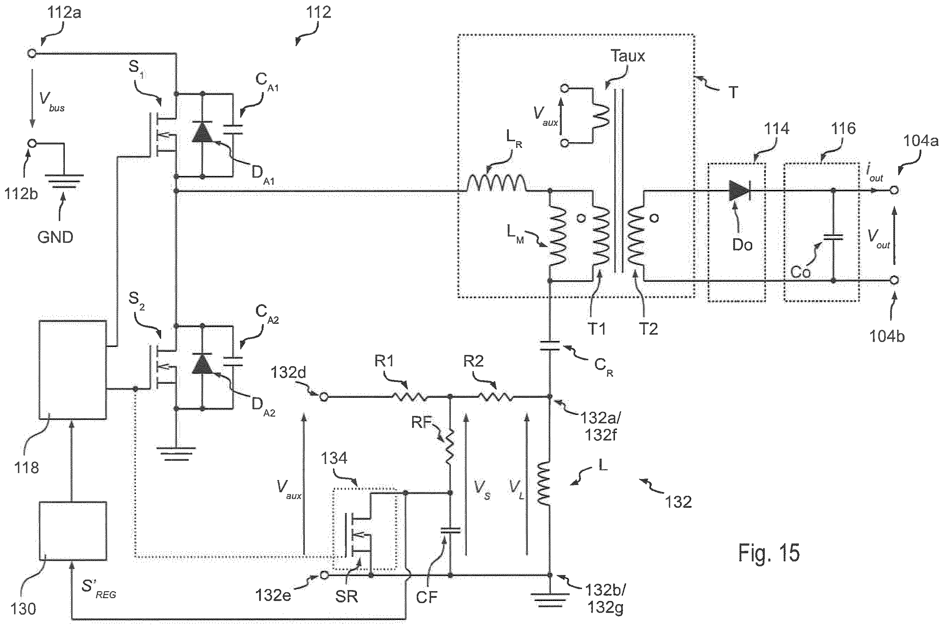

Figure 15 shows a third embodiment of an isolated half-bridge converter.

Specifically, in Figure 15, the secondary winding of transformer T has been reversed, and therefore the electronic converter transfers energy to the secondary winding during step $\Delta t1$ (and no longer during step $\Delta t3$).

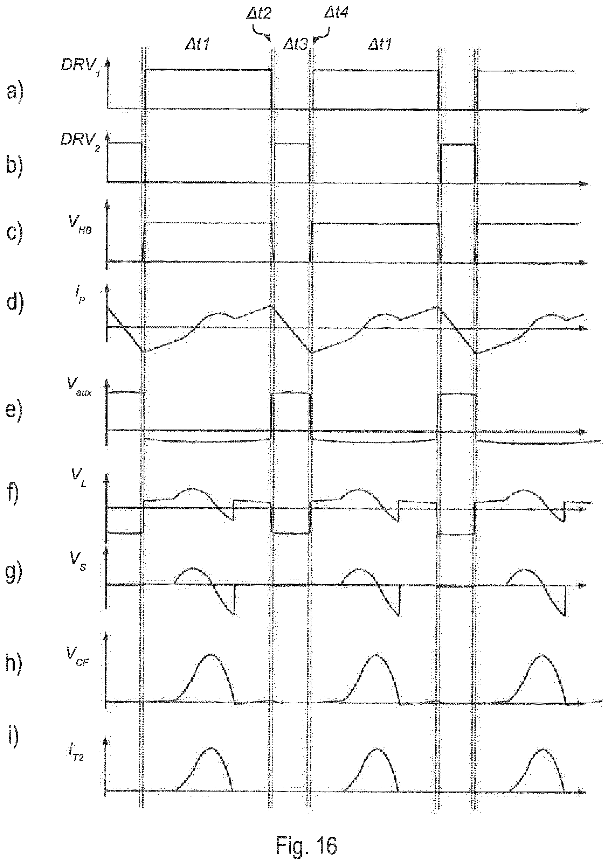

Figures 16a to 16i show some waveforms of the circuit of Figure 14, specifically:

a) drive signal $DRV_1$ for switch $S_1$,
b) drive signal $DRV_2$ for switch $S_2$,
c) voltage $V_{HB}$ at the intermediate point of the half-bridge, which corresponds e.g. to the voltage $V_{DS}$ of FET $S_2$,
d) current $i_P$ flowing through the primary side T1 of transformer T,
e) auxiliary voltage $V_{aux}$ across the inductive element L of the measurement circuit 132, for example of the measurement inductor;
f) voltage $V_L$ across the inductive element L of the measurement circuit 132, e.g. of the measurement inductor;
g) voltage $V_S$ across filter RC ($R_F$ and $C_F$) of measurement circuit 132;
h) voltage $V_{CF}$ across capacitor $C_F$ of measurement circuit 132, i.e. signal $S'_{REG}$; and
i) current $i_{T2}$ flowing through the secondary winding of transformer T.

Specifically, as can be seen in Figure 16i, now the converter transfers energy to the output during step $\Delta t1$.

However, also in this case, voltage $V_S$ includes a portion deriving from the magnetization current $i_{LM}$ and a portion which depends on current $i_{T2}$. Specifically, also in this case, the magnetization current $i_{LM}$ generates a first (positive) offset *O1* during interval $\Delta t1$ and a second (negative) offset *O2* during interval $\Delta t3$.

Therefore, similarly to what has previously been described, the electronic converter might:

- either cancel only offset *O1* and disable the measurement circuit 132 during interval $\Delta t3$;
- or vary auxiliary voltage $V_{aux}$ in order to cancel offset *O1* during interval $\Delta t1$ and offset *O2* during interval $\Delta t3$.

For example, Figure 15 shows an enable circuit 134, configured to disable the measurement circuit 132 during interval $\Delta t3$. For example, for this purpose it is possible to use an electronic switch SR, such as e.g. an n-channel FET, which is connected in parallel to capacitor CF and is driven by drive signal $DRV_2$ for switch $S_2$; in other words, capacitor CF is shortcircuited during interval $\Delta t3$.

Moreover, Figure 15 shows that auxiliary voltage $V_{aux}$ may be generated also by an auxiliary winding Taux of transformer T, which therefore generates a voltage which is proportional to the offset generated by the magnetization current $i_{LM}$, i.e. O1 during interval $\Delta t1$ and O2 during interval $\Delta t3$ (see Figure 16e). Therefore, in this case the enable circuit 136 would not be required, although the presence of said circuit is anyway advantageous, e.g. in order to periodically discharge capacitor CF of the integrator.

Generally speaking, the measurement circuit 132 should have an inductance of inductor L high enough to generate a signal $V_L$ having sufficient width. However, the inductance should not be so high as to interfere with the operation of the electronic converter. For example, in various embodiments, the inductance amounts to 3 - 20 uH (micro-Henry).

If the noise generated by said inductor L is too high, it is possible to resort to the measurement circuits 132 shown in Figures 10 and 11, wherein the inductor has been replaced by a transformer T'.

Specifically, said transformer T' should be designed in such a was as to have a low impedance on the side of the winding which is connected between terminals 132a and 132b, thereby reducing the influence on the operation of the electronic converter. The impedance on the side of the winding which is connected between nodes 132f and 132g may therefore be higher, and it depends on the number of windings of transformer T' (which is thus typically higher on the side of nodes 132f and 132g). In this way, a higher voltage $V_L$ may be obtained as compared with the presence of a single inductor (for the same inductance between terminals 132a and 132b). Because transformer T' is in any case located on the primary side T1 of transformer T, no particular electrical isolation is required, which on the contrary would be necessary in the solution shown in Figure 7.

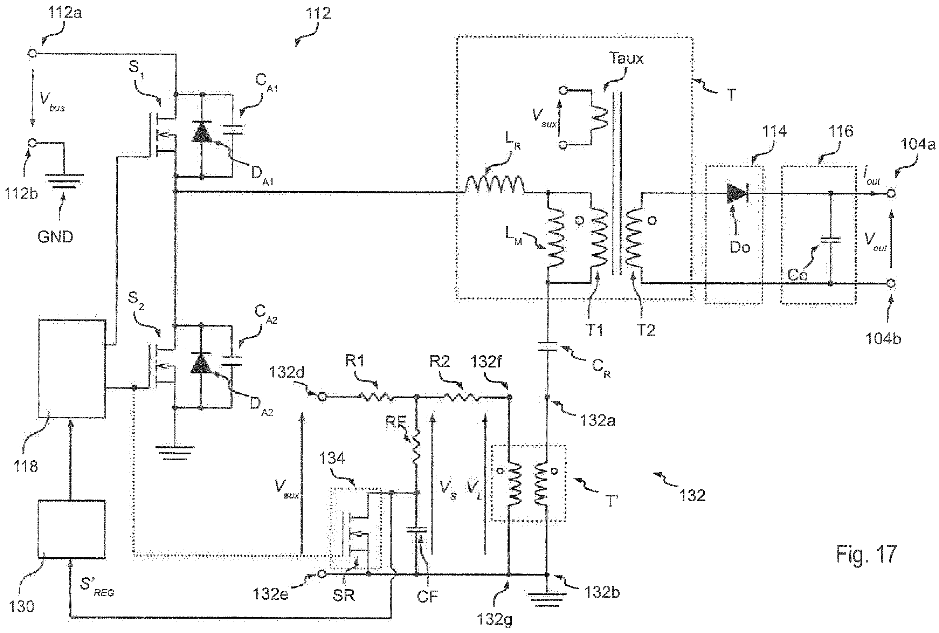

For example, Figure 17 shows an embodiment of the electronic converter employing the measurement circuit of Figure 11.

In this case, a winding of transformer T' is thus connected in series with the primary winding T1 of transformer T. For example, similarly to Figure 15, in the presently considered embodiment terminals 132a and 132b, which correspond to the terminals of the first winding of transformer T', are connected between capacitor $C_R$ and ground GND.

Therefore, the current $i_P$ flows through the first winding of transformer T', and the second winding connected between nodes 132f and 132g supplies a voltage $V_L$ which is proportional to the derivative of current $i_P$.

The various circuits for cancelling offset O1 and/or offset O2 may therefore be used also in combination with a transformer T'. For example, in the presently considered embodiment, an auxiliary winding Taux of transformer T is employed once again in order to generate the auxiliary voltage $V_{aux}$.

Similarly, the measurement circuit 132 may have an enable circuit 134 associated thereto. For example, considering the operation of the converter, it is possible to employ the enable circuit shown in Figure 15, which disables the measurement circuit 132 during interval $\Delta t3$.

In the embodiments described in the foregoing, the measurement circuit 132 has been employed in an asymmetric electronic converter, i.e. with an energy transfer which is different during step $\Delta t1$ and step $\Delta t3$. In this case, it is advantageous to employ an enable circuit 134, configured to disable the output of measurement circuit 132 when no current may be supplied by the secondary winding T2 of transformer T, even only to periodically "reset" the measurement by discharging capacitor CF.

Generally speaking, the measurement circuits 132 of the present description may also be used in other types of electronic converters, e.g. symmetric converters.

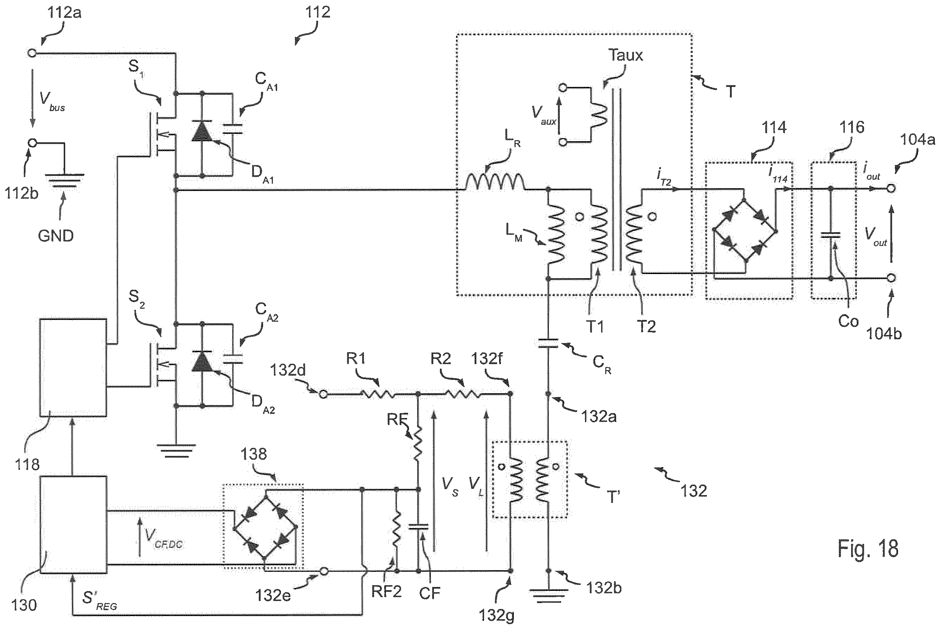

For example, Figure 18 shows an embodiment of an electronic converter wherein the rectifier circuit 114 includes a diode bridge. Therefore, in the presently considered electronic converter both positive and negative waves are transferred, i.e. during both interval $\Delta t1$ and interval $\Delta t3$.

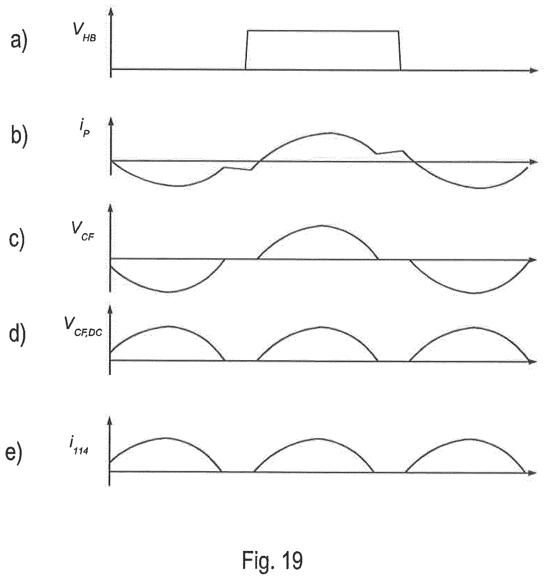

For example, Figures 19a to 19e show some exemplary embodiments for:

    a) voltage $V_{HB}$ at the intermediate point of the half-bridge;
    b) current $i_P$ flowing through primary side T1;
    c) voltage $V_{CF}$ to capacitor CF;
    d) a voltage $V_{CF,DC}$ corresponding to voltage $V_{CF}$ once rectified; and
    e) current $i_{114}$ which is supplied by the rectifier circuit 114.

Specifically, in the presently considered embodiment no enable circuit 134 is provided, because the measurement circuit 132 should always be active in order to monitor current $i_P$. In this case, however, it is suitable to provide mechanisms for discharging (albeit optionally slowly) capacitor CF, e.g. for discharging capacitor CF when the converter is switched off. For example, in the presently considered embodiment, measurement circuit 132 to this end includes a resistor RF2 connected in parallel with capacitor CF. Generally speaking, said resistor RF2 may be provided also in the other electronic converters and measurement circuits described in the foregoing.

In the presently considered embodiment, the auxiliary voltage $V_{aux}$ should therefore vary in order to compensate offset $O1$ during interval $\Delta t1$ and offset $O2$ during interval $\Delta t3$. For example, the presently considered embodiment once again employs an auxiliary winding Taux of transformer T, which provides voltage $V_{aux}$.

Therefore, in the presently considered embodiment, voltage $V_{CF}$ is an alternated voltage (also refer to Figure 19c).

If the regulation circuit 130 requires a positive voltage, the electronic converter may therefore include a rectifier circuit 136, configured to generate a rectified voltage $V_{CF,DC}$ as a function of voltage $V_{CF}$ (see Figure 19d). Said rectified voltage is therefore proportional to current $i_{114}$, supplied by the rectifier circuit 114 to filter 116.

Generally speaking, measurement circuits 132 may therefore be employed in various kinds of electronic converters which employ a transformer T and a switching stage 112. Therefore, generally speaking transformer T includes a magnetization inductance, so that the current $i_P$ flowing through primary winding T1 corresponds to the sum of the magnetization current $i_{LM}$ flowing through magnetization inductance $L_M$ and of a current $i_{T1}$ which is proportional (on the basis of the number of windings of the transformer) to current $i_{T2}$ flowing through secondary winding T2.

In this case, it is sufficient for the driver circuit 118 and for the switching stage 112 to be configured to:

- during a first interval $\Delta t1$, apply a positive voltage to primary winding T1, so that the magnetization current $i_{LM}$ increases substantially linearly, and
- during a second interval $\Delta t3$, apply a negative voltage to the primary winding T1, so that the magnetization current $i_{LM}$ decreases substantially linearly.

As a matter of fact, in this case the inductive element L/T' of measurement circuit 132 supplies a voltage $V_L$ which is proportional to the derivative of current $i_P$ so that, as voltage $V_L$ includes the sum of the derivative of magnetization current $i_{LM}$ and current $i_{T1}$, voltage $V_L$ includes a first (positive) offset $O1$ during the first interval $\Delta t1$, and a second (negative) offset $O2$ during the second interval $\Delta t3$. Therefore, the offset cancellation circuit of measurement circuit 132, which is represented e.g. by resistors R1/R2 and by the means for generating the auxiliary voltage $V_{aux}$, may generate a voltage $V_S$ by cancelling at least one between the first offset $O1$ and the second offset $O2$ of voltage $V_L$. Finally, the analog integrator of measurement circuit 132 may generate the measurement signal $S'_{REG}$ by integrating voltage $V_S$.

As previously explained, the measurement circuit 132 of the present description is particularly useful for resonant electronic converters, i.e. converters wherein the current flowing through the primary side includes resonances generated by a resonant circuit, a so-called resonant tank. For example, in the electronic converters described in the foregoing, said resonant circuit may be generated by suitably sizing the leakage inductance $L_R$ and the capacitor $C_R$. Generally speaking, the resonant circuit may also include other components, such as e.g. an inductor connected in series with leakage inductance $L_R$.

Generally speaking, it is not mandatory for said resonant circuit to be located exclusively on the primary side; on the contrary, the resonant circuit may also be located on the secondary side, or partially on the primary and partially on the secondary side.

Moreover, other filter circuits 116 may be employed.

For example, Figure 20 shows an embodiment of an electronic converter wherein the converter includes, on the secondary side, three branches which are connected (e.g. directly) in parallel:

- a first branch including a diode Do;
- a second branch including the secondary winding T2 of transformer T and a capacitor $C_{RS}$, which are connected (e.g. directly) in series; and
- a third branch, including an inductor Lo and the output 104a/104b connected in series, wherein preferably a capacitor Co is connected in parallel with output 104a/104b.

The operation of such an electronic converter is described e.g. in WO 2015/044846 A1, the content whereof is included herein for reference. For example, as described in WO 2015/044846 A1, the components of filter circuit 116 may also be sized so as to participate in the resonance.

In this case as well, the measurement circuit 132 may be connected in series with primary winding T1. As a matter of fact, the measurement circuit 132 described in the foregoing is adapted to cancel the contribution of current $i_P$, which derives exclusively from the magnetization current $i_{LM}$, while the residual current $i_{T1}$ (which is proportional to current $i_{T2}$) may have any waveform and may include e.g. the typical oscillations created by the resonant components of the electronic converter.

Therefore, the measurement circuits 132 described in the foregoing are adapted to sense, directly on the primary side, the current $i_{T2}$ transferred to the secondary side T2 of the transformer, i.e. no components are required on the secondary side T2, such as e.g. bulky current transformers, to transfer the current from the secondary side to the primary side, or costly optocouplers. As a consequence, the cost of circuit 132 may be reduced accordingly.

Of course, without prejudice to the principle of the invention, the implementation details and the embodiments may vary, even appreciably, with respect to what has been described herein by way of non-limiting example only, without departing from the scope of the invention as defined by the annexed claims.

<div align="center">

**LIST OF REFERENCE SIGNS**

</div>

| | |
|---|---|
| Electronic converter | 10 |
| Input terminal | 102 |
| Output terminals | 104 |
| Filter circuit | 106 |
| Rectifier circuit | 108 |
| Filter circuit | 110 |
| Switching stage | 112 |
| Input terminals | 112a, 112b |
| Rectifier circuit | 114 |
| Filter circuits | 116 |
| Control circuit | 118 |
| Feedback circuit | 120 |
| Measurement circuit on the secondary side | 122 |
| Transmission circuit | 124 |
| Optocoupler | 126 |
| Receiver circuit | 128 |
| Regulation unit | 130 |
| Measurement circuit on the primary side | 132 |
| Enable circuit | 134 |
| Lighting module | 20 |
| LED string | 22 |
| Current regulator | 24 |
| Input terminal | 200 |
| Capacitance | $C_{A1}, C_{A2}$ |
| Capacitor | $CF, Co, C_R$ |
| Diode | $D_{A1}, D_{A2}$ |
| Diode | $Do, DR$ |
| Inductor | $L_O$ |
| Inductive element | $L, T'$ |
| Resistors | $R1, R2, RF$ |
| Voltage divider | $R1D, R2D$ |
| Transformer | $T, Ts$ |
| Primary winding | $T1$ |
| Secondary winding | $T2$ |
| Auxiliary winding | $Taux$ |
| Electronic switch | $S_1, S_2, SR$ |
| Regulation signal | $FB_{REG}$ |
| Output current | $i_{out}$ |
| Bus voltage | $V_{bus}$ |
| Input voltage | $V_{in}$ |
| Rectified input voltage | $V_{in,DC}$ |
| Output voltage | $V_{out}$ |

**Claims**

1.  An electronic converter (10) comprising:

- two input terminals (112a, 112b) for receiving a DC input voltage ($V_{bus}$);
- a transformer (T) comprising a primary winding (T1) and a secondary winding (T2), wherein said transformer (T) comprises a magnetization inductance ($L_M$) and a leakage inductance ($L_R$), wherein a current ($i_P$) flowing through said primary winding (T1) corresponds to the sum of a magnetization current ($i_{LM}$) flowing through said magnetization inductance ($L_M$) and a current ($i_{T1}$) which is proportional, based on the number of windings of said transformer (T), to current ($i_{T2}$) flowing through said secondary winding (T2) of said transformer (T);
- a switching stage (112) configured to transfer selectively energy from said two input terminals (112a, 112b) to said primary winding (T1) of said transformer (T) ;
- a measurement circuit (132) configured to determine a measurement signal ($S'_{REG}$) indicative of the current ($i_{T2}$) flowing through said secondary winding (T2) of said transformer (T); and
- a driver circuit (118) configured to drive *(DRV)* said switching stage (112) as a function of said measurement signal ($S'_{REG}$), wherein said driver circuit (118) is configured to:

> - during a first interval ($\Delta t1$), apply a positive voltage to said primary winding (T1) of said transformer (T), whereby said magnetization current ($i_{LM}$) increases substantially linearly, and
> - during a second interval ($\Delta t3$), apply a negative voltage to said primary winding (T1) of said transformer (T), whereby said magnetization current ($i_{LM}$) decreases substantially linearly;

wherein said measurement circuit (132) comprises:

> - an inductive element (L, T') connected in series with said primary winding (T1) of said transformer (T), such that said current ($i_P$) flowing through said primary winding (T1) of said transformer (T) flows through said inductive element (L, T'),
> **characterized in that**
> said inductive element (L, T') comprises a first node (132f) and a second node (132g) which provide a first voltage ($V_L$) proportional to the derivative of the current ($i_P$) flowing through said inductive element (L), whereby, due to the fact that said first voltage ($V_L$) comprises the sum of the derivative of said magnetization current ($i_{LM}$) and said current ($i_{T1}$) being proportional to said current ($i_{T2}$) flowing through said secondary winding (T2) of said transformer (T), said first voltage ($V_L$) comprises in addition to a voltage proportional to the derivative of said current ($i_{T2}$) flowing through said secondary winding (T2) of said transformer (T):
>
> > - a first offset (O1) during said first interval ($\Delta t1$), and
> > - a second offset (O2) during said second interval ($\Delta t3$);
>
> - an offset cancellation circuit (R1, R2, $V_{aux}$) configured to generate a second voltage ($V_S$) by cancelling said first offset (O1) and/or said second offset (O2) from said first voltage ($V_L$), wherein said offset cancellation circuit (R1, R2, $V_{aux}$) comprises:
>
> > - a first (132d) and a second (132e) terminal, wherein said second terminal (132e) is connected to said second node (132g),
> > - means (136; $C_R$, R1D, R2; Taux) for generating an auxiliary voltage ($V_{aux}$) at said first (132d) and said second (132e) terminal, wherein said means (136; $C_R$, R1D, R2; Taux) for generating said auxiliary voltage ($V_{aux}$) are configured to generate a negative voltage during said first interval ($\Delta t1$) and/or a positive voltage during said second interval ($\Delta t3$), and
> > - two resistors (R1, R2) connected in series between said first terminal (132d) and said first node (132f), wherein said second voltage ($V_S$) corresponds to the voltage between the intermediate point between said two resistors (R1, R2) and said second node (132g); and said measurement circuit (132) further comprises:
>
> - an integrator (RF, CF) configured to generate said measurement signal ($S'_{REG}$) by integrating said second voltage ($V_S$), wherein said integrator (RF, CF) comprises a resistor (RF) and a capacitor (CF) connected in series between said second voltage ($V_S$), wherein the voltage ($V_{CF}$) at said capacitor (CF) corresponds to said measurement signal ($S'_{REG}$).

2. The electronic converter (10) according to Claim 1, wherein said means (136; $C_R$, R1D, R2; Taux) for generating said auxiliary voltage ($V_{aux}$) comprise:

> - a voltage regulator (136) configured to generate said auxiliary voltage ($V_{aux}$) as a function of at least one drive signal (*DRV*) used by said driver circuit (118) to drive said switching stage (112) and/or said first voltage ($V_L$)

and/or said second voltage ($V_S$).

3. The electronic converter (10) according to Claim 1, wherein said means (136; $C_R$, R1D, R2; Taux) for generating said auxiliary voltage ($V_{aux}$) comprise:

- a voltage divider (R1D, R1D) connected to a terminal of said primary winding (T1).

4. The electronic converter (10) according to Claim 1, wherein said means (136; $C_R$, R1D, R2; Taux) for generating said auxiliary voltage ($V_{aux}$) comprise:

- an auxiliary winding (Taux) of said transformer (T) .

5. The electronic converter (10) according to any of the previous claims 1 to 4, wherein said inductive element (L, T') is:

- an inductor (L) connected in series with said primary winding (T1) of said transformer (T), wherein said first node (132f) and said second node (132g) correspond to the terminals of said inductor (L).

6. The electronic converter (10) according to any of the previous claims 1 to 4, wherein said inductive element (L, T') is:

- a further transformer (T') comprising a first and a second winding, wherein said first winding of said further transformer (T') is connected in series with said primary winding (T1) of said transformer (T), and said first node (132f) and said second node (132g) correspond to the terminals of said second winding of said further transformer (T').

7. The electronic converter (10) according to any of the previous claims, comprising two output terminals (104a, 104b) and a rectifier circuit (114) and a filter circuit (116) connected between said secondary winding (T2) of said transformer (T) and said two output terminals (104a, 104b).

8. The electronic converter (10) according to Claim 7, wherein:

- said rectifier circuit (114, Do) is configured to inhibit transfer of energy to said two output terminals (104a, 104b) during said first interval ($\Delta t1$), and wherein said electronic converter (10) comprises an enable circuit (134, DR) configured to disable said measurement circuit (132) during said first interval ($\Delta t1$), or
- said rectifier circuit (114, Do) is configured to inhibit transfer of energy to said two output terminals (104a, 104b) during said second interval ($\Delta t3$), and wherein said electronic converter (10) comprises an enable circuit (134, SR) configured to disable said measurement circuit (132) during said second interval ($\Delta t3$).

9. The electronic converter (10) according to any of the previous claims, comprising a regulator circuit (130) configured to generate a regulation signal ($FB_{REG}$) as a function of said first signal ($S_{REG}$) and one or more reference signals (REF), and wherein said driver circuit (118) is configured to drive *(DRV)* said switching stage (112) as a function of said regulation signal ($FB_{REG}$).

10. The electronic converter (10) according to any of the previous claims, wherein said switching stage comprises two electronic switches ($S_1$, $S_2$) connected in series between said two input terminals (112a, 101b), wherein said primary winding (T1) of said transformer (T) and a capacitor ($C_R$) are connected in series between the intermediate point between said two electronic switches ($S_1$, $S_2$) and one of said two input terminals (112a, 112b).

11. The electronic converter (10) according to any of the previous claims, comprising a resonant circuit, whereby said current ($i_{T2}$) flowing through said secondary winding (T2) of said transformer (T) comprises during said first interval ($\Delta t1$) and/or said second interval ($\Delta t3$) an oscillation with a period less than twice the duration of the respective interval ($\Delta t1$, $\Delta t3$).

12. A lighting system comprising a lighting module (20) and an electronic converter (10) according to any of the previous claims.

**Patentansprüche**

1. Elektronischer Wandler (10), umfassend:

   - zwei Eingangsanschlüsse (112a, 112b) zum Empfangen einer Eingangsgleichspannung ($V_{bus}$);
   - einen Transformator (T), der eine Primärwicklung (T1) und eine Sekundärwicklung (T2) umfasst, wobei der Transformator (T) eine Magnetisierungsinduktivität ($L_M$) und eine Streuinduktivität ($L_R$) umfasst, wobei ein Strom ($i_p$), der durch die Primärwicklung (T1) fließt, der Summe eines Magnetisierungsstroms ($i_{LM}$), der durch die Magnetisierungsinduktivität ($L_M$) fließt, und eines Stroms ($i_{T1}$) entspricht, der basierend auf der Anzahl der Wicklungen des Transformators (T) proportional zu einem Strom ($i_{T2}$) ist, der durch die Sekundärwicklung (T2) des Transformators (T) fließt;
   - eine Schaltstufe (112), die konfiguriert ist, um selektiv Energie von den zwei Eingangsanschlüssen (112a, 112b) zu der Primärwicklung (T1) des Transformators (T) zu übertragen;
   - eine Messschaltung (132), die konfiguriert ist, um ein Messsignal ($S'_{REG}$) zu bestimmen, das den Strom ($i_{T2}$) anzeigt, der durch die Sekundärwicklung (T2) des Transformators (T) fließt; und
   - eine Treiberschaltung (118), die konfiguriert ist, um die Schaltstufe (112) als eine Funktion des Messsignals ($S'_{REG}$) anzutreiben (*DRV*), wobei die Treiberschaltung (118) konfiguriert ist, um

      - während eines ersten Intervalls (*Δt1*) eine positive Spannung an die Primärwicklung (T1) des Transformators (T) anzulegen, wodurch der Magnetisierungsstrom ($i_{LM}$) im Wesentlichen linear zunimmt, und
      - während eines zweiten Intervalls ($Δt_3$) eine negative Spannung an die Primärwicklung (T1) des Transformators (T) anzulegen, wodurch der Magnetisierungsstrom ($i_{LM}$) im Wesentlichen linear abnimmt; wobei die Messschaltung (132) Folgendes umfasst:

      - ein induktives Element (L, T'), das in Reihe mit der Primärwicklung (T1) des Transformators (T) verbunden ist, so dass der Strom ($i_p$), der durch die Primärwicklung (T1) des Transformators (T) fließt, durch das induktive Element (L, T') fließt, **dadurch gekennzeichnet, dass** das induktive Element (L, T') einen ersten Knoten (132f) und einen zweiten Knoten (132g) umfasst, die eine erste Spannung (*VL*) bereitstellen, die proportional zu der Ableitung des Stroms ($i_p$) ist, der durch das induktive Element (L) fließt, wobei aufgrund der Tatsache, dass die erste Spannung (*VL*) die Summe der Ableitung des Magnetisierungsstroms ($i_{LM}$) umfasst und der Strom ($i_{T1}$) proportional zu dem Strom ($i_{T2}$) ist, der durch die Sekundärwicklung (T2) des Transformators (T) fließt, die erste Spannung (*VL*) zusätzlich zu einer Spannung, die proportional zu der Ableitung des Stroms ($i_{T2}$) ist, der durch die Sekundärwicklung (T2) des Transformators (T) fließt, Folgendes umfasst:

         - einen ersten Versatz (*O1*) während des ersten Intervalls (*Δt1*), und
         - einen zweiten Versatz (*O2*) während des zweiten Intervalls ($Δt_3$);

      - eine Versatz-Aufhebungsschaltung (R1, R2, $V_{aux}$), die konfiguriert ist, um eine zweite Spannung ($V_S$) durch Aufheben des ersten Versatzes (*O1*) und/oder des zweiten Versatzes (*O2*) von der ersten Spannung (*VL*) zu erzeugen, wobei die Versatz-Aufhebungsschaltung (R1, R2, $V_{aux}$) umfasst:

         - einen ersten (132d) und einen zweiten (132e) Anschluss, wobei der zweite Anschluss (132e) mit dem zweiten Knoten (132g) verbunden ist,
         - Mittel (136; $C_R$, R1D, R2; Taux) zum Erzeugen einer Hilfsspannung ($V_{aux}$) an dem ersten (132d) und dem zweiten (132e) Anschluss, wobei die Mittel (136; $C_R$, R1D, R2; Taux) zum Erzeugen der Hilfsspannung ($V_{aux}$) konfiguriert sind, um eine negative Spannung während des ersten Intervalls (*Δt1*) und/oder eine positive Spannung während des zweiten Intervalls ($Δt_3$) zu erzeugen, und
         - zwei Widerstände (R1, R2), die in Reihe zwischen dem ersten Anschluss (132d) und dem ersten Knoten (132f) verbunden sind, wobei die zweite Spannung ($V_S$) der Spannung zwischen dem Zwischenpunkt zwischen den beiden Widerständen (R1, R2) und dem zweiten Knoten (132g) entspricht; und

      die Messschaltung (132) ferner umfasst:

         - einen Integrator (RF, CF), der konfiguriert ist, um das Messsignal ($S'_{REG}$) durch Integrieren der zweiten Spannung ($V_S$) zu erzeugen, wobei der Integrator (RF, CF) einen Widerstand (RF) und einen Kondensator (CF) umfasst, die in Reihe zwischen der zweiten Spannung ($V_S$) verbunden sind, wobei die Spannung (VCF) an dem Kondensator (CF) dem Messsignal ($S'_{REG}$) entspricht.

2. Elektronischer Wandler (10) gemäß Anspruch 1, wobei die Mittel (136; $C_R$, R1D, R2; Taux) zum Erzeugen der Hilfsspannung ($V_{aux}$) umfassen:

   - einen Spannungsregulator (136), der konfiguriert ist, um die Hilfsspannung ($V_{aux}$) als eine Funktion von mindestens einem Treibersignal (DRV) zu erzeugen, das von der Treiberschaltung (118) verwendet wird, um die Schaltstufe (112) und/oder die erste Spannung (VL) und/oder die zweite Spannung ($V_S$) anzutreiben.

3. Elektronischer Wandler (10) gemäß Anspruch 1, wobei die Mittel (136; $C_R$, R1D, R2; Taux) zum Erzeugen der Hilfsspannung ($V_{aux}$) umfassen:

   - einen Spannungsteiler (R1D, R1D), der mit einem Anschluss der Primärwicklung (T1) verbunden ist.

4. Elektronischer Wandler (10) gemäß Anspruch 1, wobei die Mittel (136; $C_R$, R1D, R2; Taux) zum Erzeugen der Hilfsspannung ($V_{aux}$) umfassen:

   - eine Hilfswicklung (Taux) des Transformators (T).

5. Elektronischer Wandler (10) gemäß einem der vorhergehenden Ansprüche 1 bis 4, wobei das induktive Element (L, T') Folgendes ist:

   - eine Induktionsspule (L), die mit der Primärwicklung (T1) des Transformators (T) in Reihe verbunden ist, wobei der erste Knoten (132f) und der zweite Knoten (132g) den Anschlüssen der Induktionsspule (L) entsprechen.

6. Elektronischer Wandler (10) gemäß einem der vorangehenden Ansprüche 1 bis 4, wobei das induktive Element (L, T') Folgendes ist:

   - ein weiterer Transformator (T'), der eine erste und eine zweite Wicklung umfasst, wobei die erste Wicklung des weiteren Transformators (T') mit der Primärwicklung (T1) des Transformators (T) in Reihe geschaltet ist, und der erste Knoten (132f) und der zweite Knoten (132g) den Anschlüssen der zweiten Wicklung des weiteren Transformators (T') entsprechen.

7. Elektronischer Wandler (10) gemäß einem der vorhergehenden Ansprüche, umfassend zwei Ausgangsanschlüsse (104a, 104b) und eine Gleichrichterschaltung (114) und eine Filterschaltung (116), die zwischen der Sekundärwicklung (T2) des Transformators (T) und den beiden Ausgangsanschlüssen (104a, 104b) verbunden sind.

8. Elektronischer Wandler (10) gemäß Anspruch 7, wobei:

   - die Gleichrichterschaltung (114, D0) konfiguriert ist, um Übertragung von Energie zu den beiden Ausgangsanschlüssen (104a, 104b) während des ersten Intervalls ($\Delta t1$) zu unterdrücken, und wobei der elektronische Wandler (10) eine Enabler-Schaltung (134, DR) umfasst, die konfiguriert ist, um die Messschaltung (132) während des ersten Intervalls ($\Delta t1$) zu deaktivieren, oder
   - die Gleichrichterschaltung (114, D0) konfiguriert ist, um Übertragung von Energie zu den beiden Ausgangsanschlüssen (104a, 104b) während des zweiten Intervalls ($\Delta t_3$) zu unterdrücken, und wobei der elektronische Wandler (10) eine Enabler-Schaltung (134, DR) umfasst, die konfiguriert ist, um die Messschaltung (132) während des zweiten Intervalls ($\Delta t_3$) zu deaktivieren.

9. Elektronischer Wandler (10) gemäß einem der vorhergehenden Ansprüche, umfassend eine Regulatorschaltung (130), die konfiguriert ist, um ein Regulationssignal ($FB_{REG}$) als eine Funktion des ersten Signals ($S_{REG}$) und eines oder mehrerer Referenzsignale (REF) zu erzeugen, und wobei die Treiberschaltung (118) konfiguriert ist, um die Schaltstufe (112) als eine Funktion des Regulationssignals ($FB_{REG}$) anzutreiben (DRV).

10. Elektronischer Wandler (10) gemäß einem der vorhergehenden Ansprüche, wobei die Schaltstufe zwei elektronische Schalter (S1, S2) umfasst, die in Reihe zwischen den beiden Eingangsanschlüssen (112a, 112b) verbunden sind, wobei die Primärwicklung (T1) des Transformators (T) und ein Kondensator ($C_R$) in Reihe zwischen dem Zwischenpunkt zwischen den beiden elektronischen Schaltern (S1, S2) und einem der beiden Eingangsanschlüsse (112a, 112b) verbunden sind.

11. Elektronischer Wandler (10) gemäß einem der vorhergehenden Ansprüche, umfassend einen Schwingkreis, wobei der Strom ($i_{T2}$), der durch die Sekundärwicklung (T2) des Transformators (T) fließt, während des ersten Intervalls ($\Delta t1$) und/oder des zweiten Intervalls ($\Delta t_3$) eine Schwingung mit einer Periode umfasst, die kleiner ist als die doppelte Dauer des jeweiligen Intervalls ($\Delta t1$, $\Delta t3$).

**12.** Beleuchtungssystem umfassend ein Beleuchtungsmodul (20) und einen elektronischen Wandler (10) gemäß einem der vorhergehenden Ansprüche.


**Revendications**

**1.** Un convertisseur électronique (10) comprenant :

- deux bornes d'entrée (112a, 112b) destinées à recevoir une tension d'entrée continue ($V_{bus}$) ;
- un transformateur (T) comprenant un enroulement primaire (T1) et un enroulement secondaire (T2), ledit transformateur (T) comprenant une inductance de magnétisation ($L_M$) et une inductance de fuite ($L_R$), un courant *(ip)* passant dans ledit enroulement primaire (T1) correspondant à la somme d'un courant de magnétisation ($i_{LM}$) passant dans ladite inductance de magnétisation ($L_M$) et d'un courant ($i_{T1}$) qui est proportionnel, sur la base du nombre d'enroulements dudit transformateur (T), au courant ($i_{T2}$) passant dans ledit enroulement secondaire (T2) dudit transformateur (T) ;
- un étage de commutation (112) configuré pour transférer sélectivement de l'énergie desdites deux bornes d'entrée (112a, 112b) audit enroulement primaire (T1) dudit transformateur (T) ;
- un circuit de mesure (132) configuré pour déterminer un signal de mesure ($S'_{REG}$) représentatif du courant ($i_{T2}$) passant dans ledit enroulement secondaire (T2) dudit transformateur (T) ; et
- un circuit de pilotage (118) configuré pour piloter *(DRV)* ledit étage de commutation (112) en fonction dudit signal de mesure ($S'_{REG}$), ledit circuit de pilotage (118) étant configuré pour :

   - pendant un premier intervalle ($\Delta t1$), appliquer une tension positive audit enroulement primaire (T1) dudit transformateur (T), de sorte que ledit courant de magnétisation ($i_{LM}$) augmente de façon substantiellement linéaire, et
   - pendant un second intervalle ($\Delta t3$), appliquer une tension négative audit enroulement primaire (T1) dudit transformateur (T), de sorte que ledit courant de magnétisation ($i_{LM}$) diminue de façon substantiellement linéaire ;

dans lequel ledit circuit de mesure (132) comprend :

   - un élément inductif (L, T') monté en série avec ledit enroulement primaire (T1) dudit transformateur (T), de sorte que ledit courant ($i_P$) passant dans ledit enroulement primaire (T1) dudit transformateur (T) passe dans ledit élément inductif (L, T'),
   **caractérisé en ce que**
   ledit élément inductif (L, T') comprend un premier nœud (132f) et un second nœud (132g) qui produisent une première tension ($V_L$) proportionnelle à la dérivée du courant *(ip)* passant dans ledit élément inductif (L), de sorte que, du fait que ladite première tension ($V_L$) comprend la somme de la dérivée dudit courant de magnétisation ($i_{LM}$) et dudit courant ($i_{T1}$) qui est proportionnelle au courant ($i_{T2}$) passant dans ledit enroulement secondaire (T2) dudit transformateur (T), ladite première tension ($V_L$) comprend, outre une tension proportionnelle à la dérivée dudit courant ($i_{T2}$) passant dans ledit enroulement secondaire (T2) dudit transformateur (T) :

      - un premier offset (*O1*) pendant le premier intervalle ($\Delta t1$), et
      - un second offset (*O2*) durant ledit second intervalle ($\Delta t3$);

   - un circuit d'annulation d'offset (R1, R2, $V_{aux}$) configuré pour générer une seconde tension (Vs) par annulation dudit premier offset (*O1*) et/ou dudit second offset (*O2*) de ladite première tension ($V_L$), le circuit d'annulation d'offset (R1, R2, $V_{aux}$) comprenant :

      - une première borne (132d) et une seconde borne (132e), ladite seconde borne (132e) étant reliée audit second nœud (132g),
      - un moyen (136 ; $C_R$, R1D, R2 ; Taux) pour générer une tension auxiliaire ($V_{aux}$) sur ladite première (132d) et ladite seconde (132e) bornes, ledit moyen (136 ; $C_R$, R1D, R2 ; Taux) pour générer ladite tension auxiliaire ($V_{aux}$) étant configuré pour générer une tension négative pendant ledit premier intervalle ($\Delta t1$) et/ou une

tension positive pendant ledit second intervalle ($\Delta t3$),
- deux résistances (R1, R2) montées en série entre ladite première borne (132d) et ledit premier nœud (132f), ladite seconde tension (Vs) correspondant à la tension entre le point milieu entre lesdites deux résistances (R1, R2) et ledit second nœud (132g) ; et

ledit circuit de mesure (132) comprend en outre :

- un intégrateur (RF, CF) configuré pour générer ledit signal de mesure ($S'_{REG}$) par intégration de ladite seconde tension ($V_S$), ledit intégrateur (RF, CF) comprenant une résistance (RF) et un condensateur (CF) montés en série entre ladite seconde tension ($V_S$), la tension ($V_{CF}$) sur ledit condensateur (CF) correspondant audit signal de mesure ($S'_{REG}$).

2. Le convertisseur électronique (10) selon la revendication 1, dans lequel ledit moyen (136 ; $C_R$, R1D, R2 ; Taux) pour générer ladite tension auxiliaire ($V_{aux}$) comprend :

- un régulateur de tension (136) configuré pour générer ladite tension auxiliaire ($V_{aux}$) en fonction d'au moins un signal de pilotage (DRV) utilisé par ledit circuit de pilotage (118) pour piloter ledit étage de commutation (112) et/ou de ladite première tension ($V_L$) et/ou de ladite seconde tension (Vs).

3. Le convertisseur électronique (10) selon la revendication 1, dans lequel ledit moyen (136 ; $C_R$, R1D, R2 ; Taux) pour générer ladite tension auxiliaire ($V_{aux}$) comprend :

- un diviseur de tension (R1D, R1D) relié à une borne dudit enroulement primaire (T1).

4. Le convertisseur électronique (10) selon la revendication 1, dans lequel ledit moyen (136 ; $C_R$, R1D, R2 ; Taux) pour générer ladite tension auxiliaire ($V_{aux}$) comprend :

- un enroulement auxiliaire (Taux) dudit transformateur (T) .

5. Le convertisseur électronique (10) selon l'une des revendications 1 à 4 précédentes, dans lequel ledit élément inductif (L, T') est :

- une inductance (L) montée en série avec ledit enroulement primaire (T1) dudit transformateur (T), ledit premier nœud (132f) et ledit second nœud (132g) correspondant aux bornes de ladite inductance (L).

6. Le convertisseur électronique (10) selon l'une des revendications 1 à 4 précédentes, dans lequel ledit élément inductif (L, T') est :

- un autre transformateur (T') comprenant un premier et un second enroulement, ledit premier enroulement dudit autre transformateur (T') étant monté en série avec ledit enroulement primaire (T1) dudit transformateur (T), et ledit premier nœud (132f) et ledit second nœud (132g) correspondant aux bornes dudit second enroulement dudit autre transformateur (T').

7. Le convertisseur électronique (10) selon l'une des revendications précédentes, comprenant deux bornes de sortie (104a, 104b) et un circuit redresseur (114) et un circuit de filtrage (116) monté entre ledit enroulement secondaire (T2) dudit transformateur (T) et lesdites deux bornes de sortie (104a, 104b).

8. Le convertisseur électronique (10) selon la revendication 7, dans lequel :

- ledit circuit redresseur (114, Do) est configuré pour inhiber le transfert d'énergie auxdites deux bornes de sortie (104a, 104b) pendant ledit premier intervalle ($\Delta t1$), et dans lequel ledit convertisseur électronique (10) comprend un circuit d'activation (134, DR) configuré pour désactiver ledit circuit de mesure (132) pendant ledit premier intervalle ($\Delta t1$), ou
- ledit circuit redresseur (114, Do) est configuré pour inhiber le transfert d'énergie auxdites deux bornes de sortie (104a, 104b) pendant ledit second intervalle ($\Delta t3$), et dans lequel ledit convertisseur électronique (10) comprend un circuit d'activation (134, SR) configuré pour désactiver ledit circuit de mesure (132) pendant ledit second intervalle ($\Delta t3$).

9. Le convertisseur électronique (10) selon l'une des revendications précédentes, comprenant un circuit régulateur (130) configuré pour générer un signal de régulation *(FBREG)* en fonction dudit premier signal *(SREG)* et d'un ou plusieurs signaux de référence (*REF*), et dans lequel ledit circuit de pilotage (118) est configuré pour piloter *(DRV)* ledit étage de commutation (112) en fonction dudit signal de régulation ($FB_{REG}$).

10. Le convertisseur électronique (10) selon l'une des revendications précédentes, dans lequel ledit étage de commutation comprend deux commutateurs électroniques ($S_1$, $S_2$) montés en série entre lesdites deux bornes d'entrée (112a, 112b), ledit enroulement primaire (T1) dudit transformateur (T) et un condensateur ($C_R$) étant montés en série entre le point milieu des deux commutateurs électroniques ($S_1$, $S_2$) et l'une desdites deux bornes d'entrée (112a, 112b).

11. Le convertisseur électronique (10) selon l'une des revendications précédentes, comprenant un circuit résonant, de sorte que ledit courant ($i_{T2}$) passant dans ledit enroulement secondaire (T2) dudit transformateur (T) comporte pendant ledit premier intervalle ($\Delta t1$) et/ou ledit second intervalle ($\Delta t3$) une oscillation de période inférieure à deux fois la durée de l'intervalle respectif ($\Delta t1$, $\Delta t3$).

12. Un système d'éclairage comprenant un module d'éclairage (20) et un convertisseur électronique (10) selon l'une des revendications précédentes.

Fig. 1

Fig. 2

Fig. 3

Fig. 5

Fig. 4

Fig. 6

Fig. 7

Fig. 8

Fig. 9

Fig. 10

Fig. 11

Fig. 12

Fig. 13

EP 3 528 378 B1

Fig. 14

Fig. 15

Fig. 16

Fig. 17

Fig. 18

a)  $V_{HB}$

b)  $i_P$

c)  $V_{CF}$

d)  $V_{CF,DC}$

e)  $i_{114}$

Fig. 19

Fig. 20

EP 3 528 378 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO IB2016055923 A
- WO 2017122129 A1
- US 9203318 B2
- US 2010020578 A1
- US 2015109824 A1
- US 2012236610 A
- US 2011228566 A1
- WO 2015044846 A1

### Non-patent literature cited in the description

- **L. WUIDART.** Application Note-Topologies For Switched Mode Power Supplies. *STMicroelectronics,* 1999